# EUROPÄISCHE PATENTSCHRIFT

(11) **EP 3 238 989 B1**
(45) Veröffentlichungstag und Bekanntmachung des Hinweises auf die Patenterteilung: **01.04.2020**
(21) Anmeldenummer: 17167688.5
(22) Anmeldetag: 24.04.2017
(51) Int. Cl.: B60N 2/68, B60N 2/01, B60N 2/42, B60N 2/427, B60N 2/015

(54) **VORRICHTUNG ZUR ANORDNUNG EINES PERSONENRÜCKHALTESYSTEMS IN EINEM VERKEHRSMITTEL, PERSONENSITZANORDNUNG UND VERKEHRSMITTEL**
DEVICE FOR ARRANGING A PASSENGER RETENTION SYSTEM IN A MEANS OF TRANSPORT, PASSENGER SEAT ASSEMBLY AND MEANS OF TRANSPORT
DISPOSITIF D'AGENCEMENT D'UN SYSTÈME DE RETENUE DE PERSONNE DANS UN MOYEN DE TRANSPORT, AGENCEMENT DE SIÈGE DE PERSONNE ET MOYEN DE TRANSPORT

(30) Priorität: 25.04.2016 DE 102016107639; 22.09.2016 DE 102016117886
(43) Veröffentlichungstag der Anmeldung: 01.11.2017
(73) Patentinhaber: AGUTI PRODUKTENTWICKLUNG & DESIGN GMBH, 88085 Langenargen (DE)
(72) Erfinder: Grieger, Andreas, 88079 Kressbronn (DE); Brugger, Roland, 88097 Eriskirch (DE)
(74) Vertreter: Otten, Roth, Dobler & Partner mbB Patentanwälte

(56) Entgegenhaltungen:
- EP-A2- 2 465 755
- DE-A1-102008 006 549
- DE-A1-102014 003 966
- DE-C1- 3 706 394
- US-A1- 2012 274 115

## Beschreibung

### Stand der Technik

Vorrichtungen zur Anbringung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel.

In Verkehrsmitteln wie Fahrzeugen beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

Die EP 2 465 755 A2 betrifft eine Anbringvorrichtung für ein Personenrückhaltesystem eines Fahrzeugs.

### Aufgabe und Vorteile der Erfindung

Aufgabe der vorliegenden Erfindung ist es, eine Vorrichtung der einleitend beschriebenen Art bzw. eine Personensitzanordnung für ein Verkehrsmittel technisch und wirtschaftlich vorteilhaft bereitzustellen. Insbesondere sollen Stabilitätskriterien und ein gewünschtes Verhalten der Vorrichtung im praxisrelevanten Belastungsfall vorteilhaft erfüllt werden.

Diese Aufgabe wird durch den unabhängigen Anspruch 1 gelöst. Die abhängigen Ansprüche betreffen vorteilhafte und zweckmäßige Weiterbildungen der Erfindung.

Die Erfindung geht aus von einer Vorrichtung zur Anordnung eines Personenrückhaltesystems in einem Verkehrsmittel, um mit dem Personenrückhaltesystem eine in dem Verkehrsmittel sitzende Person zu sichern, wobei die Vorrichtung eine Stützanordnung mit einer Vertikalstütze umfasst.

Die erfindungsgemäße Vorrichtung ist vorzugsweise als Basisgestell beziehungsweise als Gurt- und Sitzgestell ausgebildet, insbesondere in der Art einer Grundstruktur für eine Sitzanordnung im Verkehrsmittel beziehungsweise für eine Fahrzeugsitzanordnung.

Die Stützanordnung bildet einen mechanisch belastbaren Teil eines Sitzgestells als Unterkonstruktion eines Personensitzes bzw. Fahrzeugsitzes. Die Vorrichtung kann genau eine Vertikalstütze umfassen, umfasst jedoch in der Regel zwei oder mehr als zwei Vertikalstützen. Die jeweilige Vertikalstütze ist mit ihrem unteren Ende unmittelbar oder über eine Zwischenanordnung auf einem Bodenabschnitt des Verkehrsmittels aufrecht stehend fixierbar. Die Stützanordnung bzw. die Vertikalstütze kann mit ihrer Längsachse senkrecht oder dazu leicht geneigt vorhanden sein, gegebenenfalls über Neigungsverstellmittel der Vorrichtung verstellbar in der Neigung.

Die betreffende Vorrichtung ist insbesondere als Einbauvorrichtung in der Art eines rahmenartigen Gestells ausgebildet, umfassend Freilassungen, die von parallel und winklig zueinander ausgerichteten, miteinander verbundenen länglichen Profilen umrahmt sind. Die Profile bestehen vorzugsweise aus einem metallischen Material.

Die Vorrichtung zur Anordnung des Personenrückhaltesystems in dem Verkehrsmittel ist vorzugsweise derart ausgelegt und ausgebildet, in dem Verkehrsmittel beziehungsweise in einem Kraftfahrzeug an dem Bodenabschnitt des Verkehrsmittel befestigt zu werden. Bevorzugt so, dass die Befestigung der Vorrichtung allein an dem Bodenabschnitt beispielsweise an einer Bodenplatte im Verkehrsmittel lösbar oder unlösbar fixierbar ist zum Beispiel anschraubbar oder verschweißbar.

An der im Fahrzeug eingebauten Vorrichtung sind vorzugsweise Komponenten des Personenrückhaltesystems beziehungsweise der Sicherheitsgurtanordnung und des Sitzes anbringbar. Derartige Komponenten umfassen zum Beispiel einen an einem ersten Ende eines Sicherheitsgurts angreifenden Gurtaufroller, eine Gurtumlenkanordnung zur Richtungsänderung des daran vorbeigeführten Gurts, eine Fixierung für ein zweites Gurtende und/oder ein Gurtschloss, an dem eine Einsteckteil, mit welchem der Gurt als Schlaufe ausziehbar ist, lösbar einrastbar ist. Als Sicherheitsgurtanordnungen kommen insbesondere Zweipunkt- oder andere Mehrpunkt-Gurtsysteme beispielsweise Dreipunkt-Gurtsysteme in Frage.

Die vorgeschlagene Vorrichtung muss konstruktiv bzw. mechanisch ausgelegt sein, um maximal tolerierbaren Belastungen insbesondere bei dynamischen Belastungsvorgängen einen ausreichenden Widerstand entgegensetzen zu können, also entsprechende Kräfte und Momente aufnehmen und weitergeben zu können.

Dies ist Voraussetzung zur Erhaltung der Sicherheit einer Person, welche mit einer Sicherheitsgurtanordnung sicherbar ist, wobei die Sicherheitsgurtanordnung an der im Verkehrsmittel fixierten Vorrichtung aufgenommenen ist, samt Komponenten eines entsprechenden Personensitzes. Die Vorrichtung ist demgemäß vorzugsweise so ausgestaltet, eine innere Gerüststruktur eines fest in einem Verkehrsmittel installierten Personensitzes zu bilden.

Für eine vergleichsweise höhere Stabilität der Vorrichtung, z. B. für eine erweiterte Einsatzmöglichkeit auf einen Personensitz mit zwei oder mehr Sitzplätzen, kann die Vorrichtung zum Beispiel genau zwei parallele Vertikalstützen umfassen, die vorzugsweise identisch aufgebaut sind. Die Vertikalstützen sind gegebenenfalls mit einer Querstrebe der Stützanordnung verbunden. Die Vorrichtung kann eine, zwei oder mehr vorzugsweise gleichartige Querstreben aufweisen, welche mit der einen oder mit den mehreren Vertikalstützen verbunden sind.

Die Vertikalstütze bildet vorzugsweise einen Teil einer Rückenlehnen-Grundstruktur der Vorrichtung. Die Rückenlehnen-Grundstruktur der Vorrichtung ist ausgebildet, zusammen mit daran anbaubaren Elementen eine Rückenlehne einer mit der Vorrichtung bildbaren Sitzanordnung insbesondere eines Fahrzeugsitzes zu bilden.

In der Regel umfasst die Vorrichtung genau zwei Vertikalstützen, die seitlich beziehungsweise horizontal voneinander beabstandet sind. Gegebenenfalls kann an einzelnen Längspositionen wie z. B. am unteren Endbereich und/oder am oberen Endbereich der Vertikalstützen eine Verbindung der Vertikalstützen miteinander vorhanden sein.

Die Vertikalstütze ist in der Grundform vorzugsweise ein schmales Längsprofil, das erfindungsgemäß vorzugsweise zumindest abschnittsweise als zur Längsachse der Vertikalstütze umfänglich geschlossenes oder überwiegend geschlossenes Hohlprofil ausgebildet ist, zum Beispiel in einer einfachen Grundform ein Vierkant- oder Rohr-Hohlprofil. Eine Wand der Vertikalstütze umgibt demgemäß das innere Hohlvolumen der Vertikalstütze. Gegenüber einer Vollmaterial-Vertikalstütze ist die hohle Vertikalstütze mit einem verringerten Materialeinsatz herstellbar, was ein geringeres Gewicht bedingt bei einer vergleichsweise hohen Steifigkeit und Stabilität.

Der Kern der Erfindung liegt darin, dass die Vertikalstütze mit einer Materialausnehmung in einer Wand der Vertikalstütze versehen ist. Unter einer Materialausnehmung ist vorzugsweise eine komplette Durchgreifung der Wand bzw. die Bildung eines materialfreien Lochs in der Wand gemeint. Damit ist ein insbesondere plastisches Verformungsverhalten der Vertikalstütze in einem Belastungsfall beeinflussbar bzw. ein Soll-Verformungsbereich z. B. mit einem Biegeabschnitt der Vertikalstütze definiert vorgebbar. Vorzugsweise erstreckt sich die Materialausnehmung an der betreffenden Stelle der Vertikalstütze über eine Vorderseite der Vertikalstütze und über zumindest einen an die Vorderseite anschließenden seitlichen Bereich der Vertikalstütze. Insbesondere erstreckt sich die Materialausnehmung vorzugsweise durchgehend auf der Vorderseite und auf zwei seitlich an die Vorderseite anschließende gegenüberliegende seitliche Bereiche der Vertikalstütze. Gegebenenfalls kann ein vergleichsweise schmaler Materialsteg die Materialausnehmung punktuell unterbrechen z. B. im Bereich des Abschnitts der Materialausnehmung, der auf der Vorderseite der Vertikalstütz vorhanden ist. Die Vorderseite ist bezogen auf einen Nutzzustand zu verstehen, z. B. wenn die Vorrichtung in dem Verkehrsmittel eingebaut ist. Ein mit der Vorrichtung bildbarer Personensitz weist demgemäß eine Sitzstruktur mit Sitzfläche auf, welche sich an der Vorderseite der Vorrichtung und dementsprechend an der Seite der Vorderseite der Vertikalstütze ausbildet.

Bevorzugt sind sämtliche Vertikalstützen der Vorrichtung mit einer Materialausnehmung versehen. Insbesondere kann vorgegeben werden, ab welcher Höhe einer mechanischen Belastung bzw. bei welcher Art der Belastungen auf die Vorrichtung beim im Verkehrsmittel eingebauten Nutzzustand des dazugehörigen Personensitzes eine plastische Verformung bzw. ein plastisches Verbiegen der Stützstruktur bzw. der Vertikalstütze stattfindet. Die Materialausnehmung ist vorzugsweise so abgestimmt, dass ein gewolltes vorzugsweise kontinuierliches plastisches Verformen der Vertikalstütze in einem für eine in dem dazugehörigen Personensitz sitzende und mit dem Personenrückhaltesystem gesicherte Person tolerierbaren Maß erfolgt. Außerdem können andere Teile der Vorrichtung gegen ein ungewolltes Verformen geschützt werden, da aufgrund der Materialausnehmung die an der Vorrichtung wirksame Energie allein zur Verformung der Vertikalstütze führt.

Die Wand der Vertikalstütze, in welcher die Materialausnehmung vorhanden ist, kann eine Außen-, eine Innen- und/oder eine Zwischenwand der Vertikalstütze sein, was weiter unten im Zusammenhang mit einem Mehrfach-Hohlprofilelement erklärt ist.

Vorzugsweise ist die Materialausnehmung nachträglich in die ansonsten fertiggestellte Vertikalstütze eingebracht zum Beispiel durch einen Säge-, Bohr-, Stanz- oder Laser-Bearbeitungsschritt. Damit können an der Vorrichtung gezielt und abgestimmt auf den jeweiligen Einsatzzweck der Vorrichtung die vorzugsweise mehreren Materialausnehmungen ausgebildet werden. Eine Materialausnehmung bildet in der Wand der Vertikalstütze eine materialfreie Öffnung und schwächt die mechanische Stabilität der Vertikalstütze an der entsprechenden Stelle in einem vorgebbaren bzw. definierten und vergleichsweise geringen Maß. Die Materialausnehmung kann eine rechteckförmige oder eine kreisrunde oder eine andere Grundform aufweisen.

Die materialfreien Bereiche wie zum Beispiel Schlitze unterbrechen die Wand der Vertikalstütze nur in einem vorgebbaren Maß. Mit dem damit ebenfalls vorgegebenen verbleibenden Materialbereich der Wand der Vertikalstütze wird im Nahbereich der Materialausnehmung ein Verformungsabschnitt der Vertikalstütze im mechanischen Belastungsfall bereitgestellt. Der aufgrund der Materialausnehmung fehlende Materialabschnitt bildet einen Freiraum, der Platz für eine Verformung der Vertikalstütze bereitstellt bzw. die Verformung erleichtert. Der verbleibende Materialbereich der Wand der Vertikalstütze wird im Belastungsfall definiert verbogen. Die Vertikalstütze besteht vorzugsweise aus einem plastisch vergleichsweise gut verformbaren Material bzw. zum Beispiel aus einem Metall- bzw. einem Stahlmaterial und/oder einem Aluminiummaterial und/oder einem Kunststoffmaterial. Bei einer Belastung wie einem Aufprallereignis des Verkehrsmittels wird eine andernfalls mögliche unkontrollierte Verformung der Vertikalstütze, die keine erfindungsgemäße Materialausnehmung aufweist, wird vermieden.

Abhängig von der Größe, Form und Anordnung der zumindest einen Materialausnehmung bzw. durch zwei oder mehr Materialausnehmungen der Vertikalstütze wird ein Verformungsverhalten der Vertikalstütze definiert vorgebbar.

Es ist überdies vorteilhaft, dass eine Abmessung eines in der Vertikalstütze gebildeten materialfreien Bereichs abgestimmt ist auf ein insbesondere plastisches Verformungsverhalten der Vertikalstütze bei einer mechanischen Belastung. Die mechanische Belastung betrifft ein kurzzeitiges Hochbelastungsszenario, wobei die Vorrichtung danach repariert bzw. zumindest teilweise ausgetauscht werden muss.

Mit der Erfindung kann die Vertikalstütze gezielt auf eine im Praxisfall regelmäßig auftretende Belastung insbes. bei einem Unfallszenario des Verkehrsmittels abgestimmt ausgebildet werden. Eine Abmessung eines materialfreien Bereichs ist insbesondere eine Länge, eine Breite und/oder eine Tiefe des materialfreien Bereichs in der Wand der Vertikalstütze.

Weiter ist es vorteilhaft, dass die Materialausnehmung in einer Wand der Vertikalstütze mehrere voneinander getrennte materialfreie Bereiche umfasst. Insbesondere sind die mehreren Materialausnehmungen in einer Wand der Vertikalstütze voneinander in Längsrichtung der Vertikalstütze beabstandet.

Alternativ ist es auch vorteilhaft, wenn in einer Vertikalstütze genau eine Materialausnehmung vorhanden ist. Die Materialausnehmung kann z. B. schlitzartig, fensterartig bzw. viereckig oder lochartig sein oder eine beliebige andere Forma aufweisen.

Vorzugsweise sind zwei, drei, vier oder fünf Materialausnehmung in der Vertikalstütze ausgestaltet. Bevorzugt sind die mehreren Materialausnehmungen in der Vertikalstütze gleichartig bzw. identisch untereinander.
Die mehreren voneinander getrennten Bereiche sind vorzugsweise als Querschlitze bzw. Horizontalschlitze in der Vertikalstütze gebildet.

Die jeweilige Materialausnehmung kann bezogen auf eine vierkantförmige Vertikalstütze auf einer Vorderseite der Vertikalstütze über die gesamte Vorderseite sich erstrecken und über die begrenzenden Kanten weiterführen in zwei gegenüberliegende Seitenwände der Vertikalstütze. In den Seitenwänden kann die Materialausnehmung sich zum Beispiel über die halbe Tiefe der Seitenwände erstrecken. Bei einer z. B. schmalen Form der Materialausnehmung ergibt sich so beispielsweise eine durchgehende streifenförmige Aussparung in drei zueinander rechtwinklig stehenden benachbarten bzw. U-förmigen Wänden der Vertikalstütze. Auf der Vorderseite der Vertikalstütze kann die Aussparung durch einen vergleichsweise schmalen Materialsteg unterbrochen sein, was weiter unten zu einer anderen vorteilhaften Variante der Erfindung noch diskutiert ist.

Erfindungsgemäß ist die Materialausnehmung in einer Wand der Vertikalstütze schlitzförmig ausgebildet. Eine Schlitzausnehmung ist in der Wand der Vertikalstütze, welche vorzugsweise aus einem Metallmaterial besteht, einfach und flexibel an unterschiedlichen Stellen einbringbar insbesondere in einer jeweils gewünschten Schlitzlänge und Schlitzbreite, zum Beispiel durch Sägen oder Lasern. Auch lassen sich zum Beispiel auf einem betreffenden Längs-Abschnitt der Vertikalstütze eine Mehrzahl von Schlitzen in vorgebbaren Abständen zueinander einbringen, womit jeweils ein gewünschtes Verformungsverhalten der Vertikalstütze insbesondere bei einer mechanischen Zugbelastung der Vertikalstütze exakt und individuell vorgebbar ist. Im Nutzzustand der Vorrichtung bei in dem Verkehrsmittel eingebautem Personensitz mit Personenrückhaltesystem findet als praxisrelevante Beanspruchung im Belastungsfall der Stützanordnung bzw. der Vertikalstütze z. B. regelmäßig eine mechanische Zugbelastung nach vorne an der Vertikalstütze statt. Dabei wird die Vertikalstütze über das Personenrückhaltesystem belastet, wobei im Belastungsfall Kräfte und Momente aufgrund der im Personensitz gesicherten Person über einen Gurt des Personenrückhaltesystems in die Vertikalstützen eingeleitet werden.

Bei einer an der Vertikalstütze zum Beispiel vorne offenen Materialausnehmung, welche z. B. als Schlitz quer zur Längsrichtung der Vertikalstütze ausgebildet ist, sind die beiden Enden des Schlitzes über einen verbleibenden Teil der Wand der Vertikalstütze voneinander getrennt. Der verbleibende Teil der Wand der Vertikalstütze zwischen den beiden Schlitzenden befindet sich beispielsweise bei einer Vierkant-Vertikalstütze auf einer Rückwand und zwei gegenüberliegenden Seitenwänden der Vertikalstütze. Der U-förmige Schlitz erstreckt sich dabei über die komplette Vorderseite der Vertikalstütze und einen Teil der Tiefe der beiden Seitenwände. Der Schlitz reicht mit seinen beiden Enden jeweils in einer zugehörigen Seitenwand der Vertikalstütze.

Eine Materialausnehmung wie ein Schlitz kann alternativ auch nur auf der Vorderseite der Vertikalstütze ausgebildet sein oder nur in einer oder beiden Seitenwänden.

In der Regel bleibt die Rückseite der Vertikalstütze bzw. eine in Sitzrichtung der Person des dazugehörigen Personensitzes rückwärtige Seite der Vertikalstütze frei von erfindungsgemäßen Materialausnehmungen. Damit wird ein gewolltes Verformungsverhalten der Vertikalstütze bei bestimmungsgemäßer kritischer Zug-Belastung nach vorne erreicht, wonach sich ein oberer Endabschnitt der Vertikalstütze nach vorne bzw. in Richtung der Zugbelastung an der Vertikalstütze verbiegt. Verformungen an anderen Bereichen bzw. Elementen der Vorrichtung können gegebenenfalls gezielt ausgeschlossen werden, da die an der Vertikalstütze wirkende Energie aufgrund der Materialausnehmungen nur zu einer Verformung der dazugehörigen Abschnitte der Vertikalstütze führt.

Vorteilhaft ist ein Abstand zwischen zwei benachbarten materialfreien Bereichen vorgebbar abgestimmt auf ein Verformungsverhalten der Vertikalstütze bei einer mechanischen Belastung.

Nach einer anderen vorteilhaften Ausbildung der Erfindung ist die Materialausnehmung fensterartig ausgebildet. Zum Beispiel kann genau eine fensterartige Materialausnehmung vorgesehen sein oder es sind mehrere fensterartige Materialausnehmungen an einer Vertikalstütze vorhanden. Vorzugsweise erstreckt sich die fensterartige Materialausnehmung über eine Vorderseite der Vertikalstütze und über zumindest einen seitlich an die Vorderseite anschließenden Abschnitt der Vertikalstütze, vorzugswese über zwei seitlich anschließende Seitenbereiche der Vertikalstütze. Die Höhe des materialfreien Fensters in der Vertikalstütze beträgt vorzugsweise mehrere Zentimeter zum Beispiel 5 bis 20 Zentimeter.

Eine weitere vorteilhafte Ausführungsform der Erfindung ist darin zu sehen, dass in eine Materialausnehmung ein Einsetzteil eingesteckt ist, zum Beispiel in eine fensterartige Materialausnehmung.

Vorzugsweise besteht das zur Vertikalstütze insbesondere separate Einsteckteil aus einem anderen Material als die Vertikalstütze bzw. deren Wand. Das Einsetzteil kann als Verformungselement ausgestaltet sein, das sich bei praxisrelevanter Belastung der Vertikalstütze auf eine vorgebbare bzw. gewünschte Weise verformt. Bei geringeren Belastungen der Vertikalstütze trägt das Einsetzteil zur Stabilisierung der Vertikalstütze bei, verglichen mit einer Vertikalstütze, bei welcher in der Materialausnehmung kein Einsetzteil vorhanden ist. Das Verformungselement ist bevorzugt aus einem vergleichsweise gut elastisch und/oder plastisch verformbaren Material gebildet wie z. B. einem Gummi- oder Kunststoff-Material oder einem anderen weichen Material. Das Verformungselement ist insbesondere leichter verformbar bzw. weicher als das Material der Vertikalstütze. Das Verformungselement kann alternativ ein Federelement sein.

Das Verformungselement ist vorzugsweise ein speziell auf die Materialausnehmung abgestimmt ausgebildetes Element zum Beispiel ein Spritzgussteil. Das Verformungselement ist im eingesetzten Zustand in der Materialausnehmung insbesondere nicht überstehend zu Rändern der Materialausnehmung, welche an die Materialausnehmung heranreichen. Das Verformungselement kann selbst Vertiefungen und Erhöhungen aufweisen bzw. konturiert und/oder hohl sein.

Vorteilhafterweise ist eine schlitzförmige Materialausnehmung auf einer Vorderseite der Vertikalstütze durch einen Materialbereich unterbrochen. Vorzugsweise ist der Materialbereich ein originärer Materialbereich der Wand der Vertikalstütze. Der Materialbereich kann alternativ auch z. B. nachträglich als Schweißverbindung bzw. Schweißpunkt zwischen gegenüberliegenden Rändern der Materialausnehmung gebildet sein. Mit dem Materialbereich z. B. der Wand der Vertikalstütze, der vorzugsweise als Materialbrücke bzw. Materialsteg ausgebildet ist, kann eine ungewollte geringe Verformung der Vertikalstütze durch zum Belastungsfall vergleichsweise geringe Belastungen vermieden werden. Denn der Materialsteg der Wand der Vertikalstütze, welcher den Schlitz auf der Vorderseite der Vertikalstütze an einer Stelle unterbricht, stabilisiert die Vertikalstütze geringfügig derart, dass erst dann eine plastische Verformung der Vertikalstütze erfolgt, wenn ein bestimmungsgemäßer Belastungsfall auftritt, bei dem sich die Vertikalstütze aufgrund der schlitzförmigen Materialausnehmung bzw. aufgrund der Schlitzung plastisch verformen soll. Der Materialsteg stellt insbesondere vorteilhaft sicher, dass bei der Montage oder beim Transport der Vorrichtung an der Vertikalstütze wirkende Kräfte und Momente zu keiner vergleichsweise geringen Verbiegung der Vorrichtung führen.

Im bestimmungsgemäßen Belastungsfall hingegen stellt der Materialsteg keinen relevanten Widerstand gegen eine bestimmungsgemäße bzw. stärkere plastische Verformung der Vertikalstütze bereit. Dabei verformt sich der Materialsteg plastisch, wie auch weitere Bereiche der Vertikalstütze im Nahbereich der Materialausnehmung auf gewünschte bzw. vorgebbare Weise.

Der Materialsteg trennt die schlitzförmige Materialausnehmung demgemäß in zwei Teilschlitze. Der Materialsteg ist auf der Vorderseite der Vertikalstütze z.B. mittig ausgebildet, jedoch über einen vergleichsweise geringen Teil der Gesamtlänge der Vorderseite der z. B. Vierkant-Vertikalstütze. Der Schlitz erstreckt sich vorzugsweise über die gesamte Vorderseite und einen Teil der beiden daran winklig anschließenden Seitenwände, zum Beispiel über etwa die halbe Tiefe der Seitenwände. Der vorderseitige Materialsteg weist vorzugsweise eine Breite in der Größenordnung der Schlitzbreite auf, vorzugsweise circa 1 bis circa 3 Millimeter.

Gegebenenfalls kann nach dem Transport bzw. nach der Montage der Vorrichtung in dem Verkehrsmittel der Materialbereich bzw. der Materialsteg entfernt werden, z. B. der Schweißpunkt mit einer Schleifscheibe durchtrennt werden.

Der Teil der Vertikalstütze oberhalb einer Materialausnehmung bzw. eines Schlitzes kann sich nach vorne bzw. zumindest so weit nach unten verbiegen, bis der obere Rand der Ausnehmung bzw. der obere Schlitzrand an dem gegenüberliegenden unteren Rand bzw. Schlitzrand anstößt. Bei mehreren Materialausnehmungen ergibt sich ein geringer Verbiegeweg der Vertikalstütze durch jede einzelne Materialausnehmung, so dass ein in der Summe entsprechend größerer maximal bzw. insgesamt möglicher Verbiegeweg der Vertikalstütze bzw. eine Gesamtverbiegung ergibt.

Alternativ zu genau einem Materialsteg sind zwei oder drei Materialstege bezogen auf eine Schlitzerstreckung denkbar, so dass sich auf einer Längsachse der Schlitzung drei oder vier Teilschlitze ergeben.

Nach einer modifizierte Form des Erfindungsgegenstandes ist an der Vertikalstütze ein Zusatzelement vorhanden, welches ausgebildet ist, dass ein Eingreifabschnitt des Zusatzelements passend in die Materialausnehmung in der Wand der Vertikalstütze eingreift. Das Zusatzelement ist vorzugsweise lösbar an der Vertikalstütze anbringbar.

Damit kann ein ungewolltes plastisches Verformen der Vorrichtung bzw. der Vertikalstütze aufgrund der durch die Materialausnehmung bedingten verringerten mechanischen Stabilität der Vertikalstütze unterbunden werden. Mit dem wirkenden Eingreifabschnitt wird eine höhere Stabilität der Vertikalstütze gegenüber dem Zustand mit der Materialausnehmung insbesondere in der Größenordnung der Vertikalstütze ohne Materialausnehmung bereitgestellt. Beispielsweise kann die Vorrichtung vor deren Montage zum Beispiel durch ein Umkippen und Aufschlagen auf dem Untergrund oder beim Transport durch wirkende Kräfte zur Transportfixierung durch die Materialausnehmung bedingt plastisch verbogen werden, was mit dem angesetzten Zusatzelement vermieden ist. Das Zusatzelement ist beispielsweise aus einem Kunststoffmaterial und platzsparend gestaltet, so dass das Zusatzelement außen oder innen lösbar an der Vertikalstütze ansteckbar ist. Dabei ist für eine Materialausnehmung bzw. vorzugsweise für sämtliche an der Vertikalstütze vorhandenen Materialausnehmungen jeweils ein abgestimmt ausgestalteter Eingreifabschnitt, zum Beispiel ein vorstehender Materialbereich in der Abmessung der Breite der Materialausnehmung bzw.in der Schlitzbreite, für einen leicht klemmenden Eingriff in die zugehörige Materialausnehmung vorhanden. Im Steckzustand ist der Eingreifabschnitt zwischen den Rändern der Materialausnehmung bzw. zwischen den Schlitzrändern eingeklemmt. Damit wird die Materialausnehmung statisch stabilisiert und damit die Vertikalstütze gegen ein plastisches Verformen gesichert. Nach dem Transport bzw. im nutzzustand der Vorrichtung kann dann das Zusatzelement entfernt werden.

Gemäß einer anderen alternativen Ausgestaltung der Erfindung sind als Materialausnehmungen z. B. regelmäßig geformte Ausstanzungen oder eine oder mehrere Bohrungen in der Art eines Lochmusters in der Wand der Vertikalstütze vorhanden.

Die verschiedenen Arten und Formen der Materialausnehmungen können an einer Vertikalstütze auch kombiniert vorhanden sein.

Es ist außerdem vorteilhaft, wenn die Materialausnehmung in der Wand der Vertikalstütze in einem Bereich der Vertikalstütze vorhanden ist, welcher sich unterhalb eines an der Vertikalstütze vorbereitet vorhandenen Anbringbereichs für eine Umlenkung eines Gurtes des Personenrückhaltesystems befindet. Vorzugsweise sind mehrere Schlitze bzw. mehrere Querschlitze in dem Bereich der Vertikalstütze vorhanden, der sich unterhalb an dem Anbringbereich für die Gurtumlenkung anschließt. Der Anbringbereich kann z.B. ein Flachmetallstück umfassen, das an der Vertikalstütze angebracht ist z. B. daran außen zungenartig abstehend.

Bezogen auf einen Abstand bzw. eine Höhe zwischen einer insbes. horizontalen Auflagestruktur der Vorrichtung für eine Sitzfläche des mit der Vorrichtung bildbaren Personensitzes und dem vorbereitet vorhandenen Anbringbereich für eine Umlenkung eines Gurtes des Personenrückhaltesystems sind vorzugsweise mehrere Materialausnehmungen innerhalb eines vorgebbaren Längsabschnitts der Vertikalstütz vorhanden, wobei der Längsabschnitt vorzugsweise zwischen 10 und 20 Prozent des genannten Abstandes beträgt.

Gemäß einer weiteren vorteilhaften Modifikation der Erfindung ist die Vertikalstütze in Längsrichtung betrachtet innerhalb eines Endabschnitts der Vertikalstütze mit einer Materialausnehmung in einer Wand der Vertikalstütze versehen, vorzugsweise geschlitzt ausgebildet. Der Endabschnitt kann z. B. 20 bis 40 Prozent der Länge der Vertikalstütze ausmachen.

Es ist außerdem von Vorteil, wenn die Vertikalstütze als Mehrfach-Hohlprofilelement aufgebaut ist, wobei das Mehrfach-Hohlprofilelement über seine zumindest wesentliche Erstreckung zwei miteinander längsseitig verbundene Hohlkörper umfasst.

Die zwei oder mehr Hohlkörper pro Vertikalstütze erhöht die Stabilität der Vorrichtung auf vorteilhafte Weise bei vergleichsweise geringem Gewicht. Insbesondere ist bezogen auf bekannte solche Vorrichtungen die höhere mechanische Stabilität möglich bei gleichen Abmessungen bzw. ohne dass die erfindungsgemäße Vorrichtung gegenüber bekannten Vorrichtungen größere Abmessungen bzw. Außenmaße der Vorrichtung bzw. der Vertikalstütze aufweist.

Auch ist es vorteilhaft, dass an der Vertikalstütze eine längliche Querstrebe aufgenommen ist, die winklig zur Vertikalstütze ausgerichtet ist. Die Querstrebe als Teil der Stützstruktur kann im Grundaufbau insbesondere als Hohlprofil und bezüglich der einen oder der mehreren Materialausnehmungen wie die Vertikalstütze aufgebaut sein, insbesondere als Einfach-Hohlprofil oder als Mehrfach-Hohlprofilelement, wobei das Mehrfach-Hohlprofilelement über seine zumindest wesentliche Erstreckung zwei miteinander längsseitig verbundene Hohlkörper umfasst.

Die Querstrebe ist vorzugsweise durchgehend ausgebildet und steht bevorzugt an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein Abstand der beiden Vertikalstützen.

Bei einer ersten typischen erfindungsgemäßen Vorrichtung mit zwei senkrecht im Verkehrsmittel aufstellbaren Vertikalstützen und einer horizontal gerichteten Querstrebe beträgt die Länge der Vertikalstützen bzw. die Höhe im montierten Zustand etwa 1,10 Meter bis ca. 1,30 Meter, wobei die Vertikalstützen über einen Abstand von z. B. ca. 30 bis 40 Zentimeter voneinander seitlich beabstandet sind. Eine Länge der Querstrebe liegt bevorzugt bei ca. 70 bis 90 Zentimeter.

Es ist überdies vorteilhaft, dass eine Abmessung eines durch die Schlitzung im Mehrfach-Hohlprofilelement gebildeten materialfreien Bereichs vorgebbar abgestimmt ist auf ein Verformungsverhalten des Mehrfach-Hohlprofilelementes bei einer mechanischen Belastung. Damit kann das Mehrfach-Hohlprofilelement gezielt auf eine im Praxisfall zu erwartende Belastung abgestimmt ausgebildet werden.

Überdies ist es vorteilhaft, wenn eine Abmessung des durch die Schlitzung im Mehrfach-Hohlprofilelement gebildeten materialfreien Bereichs eine Länge, eine Breite und/oder eine Tiefe des materialfreien Bereichs ist.

Die Angabe von zwei Hohlkörpern ist so zu verstehen, dass das Mehrfach-Hohlprofileelement mindestens zwei Hohlkörper umfasst bzw. ein Mehrfach-Hohlprofilelement zwei, drei und mehr Hohlkörper umfassen kann, vorzugsweise untereinander identische Hohlkörper.

Die zwei oder mehr Hohlkörper pro Vertikalstütze oder Querstrebe erhöht die Stabilität der Vorrichtung auf vorteilhafte Weise. Insbesondere ist bezogen auf bekannte solche Vorrichtungen mit Einfachprofilen die höhere mechanische Stabilität möglich bei gleichen Abmessungen bzw. ohne dass die erfindungsgemäße Vorrichtung gegenüber bekannten Vorrichtungen größere Abmessungen bzw. Außenmaße der Vorrichtung bzw. der Vertikalstütze und/oder der Querstrebe aufweist.

Bei einer zu bekannten Vorrichtungen vergleichbaren Stabilität kann die erfindungsgemäße Vorrichtung gegebenenfalls mit geringeren Abmessungen der Vertikalstütze bzw. der Querstrebe und damit mit einem geringeren Materialeinsatz bzw. mit geringerem Gewicht bereitgestellt werden.

Ein gegenüber bekannten Vorrichtungen weiterer Vorteil der Erfindung ist darin zu sehen, dass sich mit vergleichbarem oder gegebenenfalls nur geringfügig höherem Materialeinsatz signifikant höhere Stabilitätswerte der Stützstruktur realisieren lassen. Vorzugsweise weist das Mehrfach-Hohlprofil für die Vertikalstütze und/oder die Querstrebe konkret die gleichen oder zumindest nahezu gleichen Außenmaße auf wie die Außenmaße von bisher verwendeten Vertikalstützen bzw. Querstreben.

Typische Längen- und Breitenmaße bzw. Seitenmaße des rechteckigen oder quadratischen Querschnitts des Mehrfach-Hohlprofils beträgt ca. 30 bis 40 Millimeter. Eine Wanddicke jedes Hohlkörpers der zwei oder mehr Hohlkörper des Mehrfach-Hohlprofilelements liegt in der Regel im einstelligen Millimeterbereich.

Vorzugsweise ist das Mehrfach-Hohlprofil so ausgebildet, dass die Masse der aus dem gebildeten erfindungsgemäßen Vertikalstütze bzw. Querstrebe gleich oder nur vergleichsweise gering höher ist als die Masse bisheriger Vertikalstützen bzw. Querstreben bei Erfüllung der Vorgaben für den gleichen Einsatzzweck.

Für eine flexible Gestaltung der Vorrichtung kann wahlweise nur die eine oder die mehreren Vertikalstützen oder nur die eine oder die mehreren Querstreben aus dem Mehrfach-Hohlprofil gebildet sein.

Es kann sowohl die Vertikalstütze als auch die Querstrebe aus dem Mehrfach-Hohlprofil bestehen.

Vorzugsweise umfasst die erfindungsgemäße Vorrichtung genau zwei parallele Vertikalstützen und genau eine Querstrebe, wobei beide Vertikalstützen und die Querstrebe aus einem Mehrfach-Hohlprofil gebildet sind. Vorzugsweise bestehen beide Vertikalstützen und die Querstrebe aus jeweils einem Doppel-Hohlprofilelement, vorzugsweise alle drei Elemente aus einem identisch aufgebauten Mehrfach-Hohlprofil bzw. aus einem identisch aufgebauten Doppel-Hohlprofil. Lediglich in der Länge, der Verbindungsart an weiteren Elementen der Vorrichtung und/oder durch nach der Herstellung der Vertikalstützen und der Querstrebe vorgenommene Anpassungen an den Vertikalstützen und der Querstrebe können sich die drei Mehrfach-Hohlprofilelemente gegebenenfalls geringfügig individuell unterscheiden.

Vorzugsweise bestehen die beiden Vertikalstützen und die Querstrebe aus einem Doppel-Hohlprofilelement, das aus zwei miteinander verbundenen Vierkant-Rechteck-Hohlprofilen gebildet ist. Der Außenquerschnitt des aus den beiden Vierkant-Rechteck-Hohlprofilen gebildeten Doppel-Hohlprofilelements ist vorzugsweise rechteckig oder quadratisch oder zumindest angenähert quadratisch. Die Länge des Rechteckquerschnitts des Vierkant-Rechteck-Hohlprofils macht z.B. vorzugsweise das Doppelte der Breite des Rechteckquerschnitts aus.

Beispielsweise sind vorzugsweise zwei identische Vierkant-Rechteck-Hohlprofile derart miteinander verbunden, dass eine Längs-Außenseite des einen Vierkant-Rechteck-Hohlprofils der Längs-Außenseite des anderen Vierkant-Rechteck-Hohlprofils zugewandt ist, und die Längs-Außenseiten aneinander anliegen können, wobei zur Bildung des Doppel-Hohlprofilelements die beiden Vierkant-Rechteck-Hohlprofile in dieser parallelen Ausrichtung zueinander miteinander verbunden sind. Die Verbindung der beiden Vierkant-Rechteck-Hohlprofile, wenn diese aus einem schweißbaren Material bestehen, kann vorzugsweise durch mehrere einzelne Schweißpunkte über die Länge des Doppel-Hohlprofilelements entlang der jeweiligen benachbarten Längskanten der beiden Vierkant-Rechteck-Hohlprofile realisiert sein oder durch eine längliche Schweißnaht. Auch ein Verlöten, Verkleben, Verschrauben oder Vernieten ist möglich.

Die gegenüber bisherigen Anordnungen mit der erfindungsgemäßen Vorrichtung bereitstellbare erhöhte Stabilität basiert insbesondere auf dem Konstruktionsmerkmal, dass das Mehrfach-Hohlprofilelement vorteilhaft derart an der Vorrichtung ausgerichtet werden kann, dass im eingebauten Zustand der Vorrichtung im Verkehrsmittel eine äußere Beanspruchung in einem Belastungsfall durch die Struktur des Mehrfach-Hohlprofilelements vorteilhaft aufgenommen werden kann.

Im Belastungsfall kommen in der Regel insbesondere Zugkräfte und Momente in einer vorgegebenen Richtung an der Vorrichtung zur Wirkung. Damit kann das Mehrfach-Hohlprofilelement der Vertikalstütze bzw. der Querstrebe so ausgerichtet werden, dass eine Mehrzahl von in Richtung der Belastung wirkende Versteifungsabschnitte des Mehrfach-Hohlprofilelements wirksam sind.

Die Versteifungsabschnitte werden im Wesentlichen durch die Wandungen des Mehrfach-Hohlprofilelements gebildet, deren Wandebene parallel zur Belastungsrichtung ausgerichtet ist.

Denn diese Wandungen in Richtung parallel zu einer zum Beispiel Zugbelastung auf das Mehrfach-Hohlprofilelement stellen einen vergleichsweise hohen mechanischen Widerstand gegen eine plastische Verformung oder einen Materialbruch bereit.

Im eingebauten Zustand der Vorrichtung in dem Verkehrsmittel entspricht die relevante Belastungsrichtung in der Regel einer Sitzrichtung der gesicherten Person bzw. der Fahrrichtung des Verkehrsmittels bzw. des Fahrzeugs. Bei einem Fahrzeug tritt eine maximale Belastung z. B. bei einem Aufprall des fahrenden Fahrzeugs gegen ein Hindernis auf. Aufgrund der abgebremsten bewegten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrrichtung an der erfindungsgemäßen Vorrichtung wirksam und damit an den Mehrfach-Hohlprofilelementen der Vertikalstütze bzw. der Querstrebe wirksam.

Ein wesentlicher Anteil dieser Belastung wird vorteilhaft von den Wandungen der Mehrfach-Hohlprofilelemente aufgenommen, ohne dass diese sich wesentlich bzw. so dass diese sich in einem tolerierbaren Maß plastisch verformen. Die Materialausnehmungen können dementsprechend ausgebildet sein. Das Mehrfach-Hohlprofilelement stellt hierfür vorteilhaft mehrere parallel ausgerichtete und damit gleichwirkende bzw. gemeinsam versteifend wirkende Wandabschnitte bereit. Bei einem Mehrfach-Hohlprofilelement aus zwei längsseitig verbundenen vierkantförmigen Hohlkörpern sind dies zwei im Inneren des Mehrfach-Hohlprofilelements vorhandene parallele Innenwandungen und zwei gegenüberliegende Außenseiten bildende Außenwandungen, die parallel zu den Innenwandungen ausgerichtet sind. Die insgesamt vier parallelen Innen- und Außenwandungen sind in Belastungsrichtung hoch versteifend wirksam.

Gegenüber zum Beispiel einem einfachen Vierkant-Hohlprofilelement ist mit einem erfindungsgemäßen Doppel-Hohlprofilelement daher eine deutliche Stabilitätssteigerung erreichbar bzw. sind vier anstelle von zwei parallelen Wandungen versteifend wirksam, bei vorzugsweise gleichen Außenabmessung des erfindungsgemäßen Doppel-Hohlprofilelements gegenüber einem einfachen Hohlprofilelement.

Vorzugsweise stimmt die Außenabmessung der mit einem Mehrfach-Hohlprofilelement gebildeten Vertikalstütze bzw. Querstrebe mit der Außenabmessung bekannter Vertikalstützen und Querstreben überein. Damit können auf bisher genutzte Vorrichtungen abgestimmte Komponenten des Personenrückhaltesystems bzw. der Personensitzanordnung vorteilhaft in unveränderter Form an der erfindungsgemäßen Vorrichtung wie bislang angebracht werden, so dass kein Zusatzaufwand nötig wird. Auch die Einbindung der erfindungsgemäßen Vorrichtung in dem Verkehrsmittel, zum Beispiel an Befestigungsstellen, die ggf. auf bisherige Vorrichtungen abgestimmt im Bodenbereich des Verkehrsmittels vorbereitet sind, kann bei der erfindungsgemäßen Vorrichtung wie bisher erfolgen.

Jeder Hohlkörper des Mehrfach-Hohlprofilelements weist vorzugsweise ein Hohlvolumen auf, das sich in Längsrichtung des Hohlkörpers, welche vorzugsweise mit der Längsrichtung des Mehrfach-Hohlprofils zusammenfällt, durchgehend beziehungsweise insbesondere nahezu komplett durchgehend erstreckt. Damit ergibt sich im Inneren des Mehrfach-Hohlprofilelements entsprechend der Anzahl der vorhandenen Hohlkörper eine Anzahl von in Längsrichtung des Mehrfach-Hohlprofilelements durchgehender Hohlvolumina. Die zwei oder mehr Hohlvolumina sind voneinander über doppelte Wandabschnitte getrennt voneinander.

Gegebenenfalls kann ein Mehrfach-Hohlprofil auch durch mehrfaches Umbiegen eines flachen Blechmaterials gebildet sein.

Die Hohlkörper eines Mehrfach-Hohlprofilelements sind vorzugsweise identisch untereinander.

Jeder Hohlkörper weist eine Hohlkörperwand auf, welche über die Länge des Hohlkörpers zum Hohlvolumen des Hohlkörpers vorzugsweise durchgehend umfänglich geschlossen ist, zum Beispiel als Rohr- bzw. Hohlprofil.

Das Mehrfach-Hohlprofilelement ist vorzugsweise ein Mehrkant-Rohr bzw. ein Mehrkant-Hohlkörper bzw. ein Hohlkörper mit geraden Wandungsabschnitten. Dabei ist unter einem Mehrfach-Hohlprofilelement zu verstehen, dass im Inneren des Mehrfach-Hohlprofilelements bzw. innerhalb des Hohlvolumens eine Wand, vorzugsweise eine zweilagige Wand bzw. Doppel-Wand vorhanden ist bzw. bei drei oder mehr Hohlkörpern zwei oder mehr doppelte bzw. benachbarte Wandabschnitte vorzugsweise durchgehend vorhanden sind. Eine erste Wand der doppelten Wand wird von einem Hohlkörper und die zweite Wand der doppelten Wand wird von dem anderen Hohlkörper gebildet.

Das Mehrfach-Hohlprofilelement kann alternativ auch ein Rohr mit rundem oder elliptischem oder einem anderen Querschnitt mit gebogen verlaufenden Abschnitten sein. Zwei Rohre sind dabei ihrer Länge nach miteinander zu dem Mehrfach-Hohlprofilelement verbunden zum Beispiel verschweißt.

Das Mehrfach-Hohlprofilelement der Vertikalstütze ist vorzugsweise aus genau zwei Hohlkörpern gebildet.

Auch das Mehrfach-Hohlprofilelement der Querstrebe ist vorzugsweise aus genau zwei Hohlkörpern gebildet.

Ein Mehrfach-Hohlprofilelement kann auch mehr als zwei vorzugsweise drei oder vier Hohlkörper umfassen, wobei zumindest jeweils zwei benachbarte Hohlkörper der Länge nach miteinander verbunden sind.

Es ist überdies vorteilhaft, dass das Mehrfach-Hohlprofilelement aus zumindest zwei gleichartigen Hohlkörpern zusammengebaut ist. Vorzugsweise sind die zwei Hohlkörper identisch. Damit kann der Herstellungsaufwand was die Bildung des Mehrfach-Hohlprofilelements angeht minimiert werden.

Vorteilhafterweise ist das Mehrfach-Hohlprofilelement aus genau zwei vorzugsweise identischen Hohlkörpern herstellbar. Dies ist im Hinblick auf eine wirtschaftliche Herstellung und eine hohe Stabilität eine bevorzugte Variante der Erfindung.

Eine weitere vorteilhafte Ausgestaltung der Erfindung zeichnet sich dadurch aus, dass der Hohlkörper erste gegenüberliegende Hohlkörperwandungen und zweite gegenüberliegende Hohlkörperwandungen aufweist. Vorzugsweise sind die ersten Hohlkörperwandungen und die zweiten Hohlkörperwandungen winklig zueinander ausgerichtet. Damit lassen sich die Mehrfach-Hohlprofilelemente mit den Hohlkörpern so ausgerichtet räumlich bereitstellen, dass die Ebenen der Hohlkörperwandungen zumindest angenähert in Richtung von entsprechenden unterschiedlichen Hauptbelastungsrichtungen verlaufen. Damit ist die Vorrichtung hoch mechanisch belastbar und gleichzeitig platz- und materialsparend bereitstellbar.

Die Hohlkörper sind vorzugsweise einstückig bzw. zwei aneinander anschließende Hohlkörperwandungen gehen über Randbereiche mit einem Umbiege-Abschnitt ineinander über.

Vorzugsweise sind zwei erste parallele und zwei zweite parallele gegenüberliegende Hohlkörperwandungen vorhanden, welche über ein materialfreies Hohlvolumen des Hohlkörpers voneinander beabstandet sind.

Falls gewünscht, kann zum Beispiel zu Dämmzwecken das Hohlvolumen eines Hohlkörpers mit einem Material ausgefüllt werden zum Beispiel mit einem Schaumstoff.

Vorzugsweise ist das Mehrfach-Hohlprofilelement in Längsrichtung des Mehrfach-Hohlprofilelements betrachtet innerhalb eines Endabschnitts des Mehrfach-Hohlprofilelements mit einer Materialausnehmung in einer Wand des Mehrfach-Hohlprofilelements versehen vorzugsweise geschlitzt ausgebildet.

Die Materialaussparung kann mehrere voneinander getrennte Bereiche umfassen zum Beispiel Schlitze. Vorzugsweise ist ein oberer Endabschnitt der einen oder der zwei oder mehr Vertikalstützen mit einer Materialausnehmung in einer Wand des Mehrfach-Hohlprofilelements versehen vorzugsweise geschlitzt ausgebildet. Besonders bevorzugt sind mehrere Schlitze in einem oberen Endabschnitt der Vertikalstützen vorhanden. Zusätzlich oder alternativ kann die Querstrebe in einem Endabschnitt oder vorzugsweise in beiden Endabschnitten mit einer Materialausnehmung in einer Wand des Mehrfach-Hohlprofilelements versehen sein vorzugsweise geschlitzt ausgebildet bzw. mit mehreren Schlitzen bzw. Aussparungen versehen sein.

Eine Materialaussparung in einer Wand des Mehrfach-Hohlprofilelements bedeutet, dass in einer Wand eines Hohlkörpers vorzugsweise in Wänden der mehreren Hohlkörper die Materialaussparung vorhanden ist. Vorzugsweise erstreckt sich die Materialaussparung auf beide Hohlkörper bzw. erstreckt sich ein Schlitz durch eine Vorderseiten des Mehrfach-Hohlprofilelements weiter nach hinten. Der Schlitz ist vorzugsweise in beiden Hohlkörpern ausgebildet insbesondere zusammenhängend über z. B. circa eine halbe Tiefe des Mehrfach-Hohlprofilelements.

Auch ist es von Vorteil, wenn das Mehrfach-Hohlprofilelement in Längsrichtung des Mehrfach-Hohlprofilelements betrachtet innerhalb eines Endabschnitts des Mehrfach-Hohlprofilelements geschlitzt ausgebildet ist, wobei der geschlitzte Endabschnitt des Mehrfach-Hohlprofilelements eine Länge zwischen 20 und 40 Prozent der Gesamtlänge des Mehrfach-Hohlprofilelements ausmacht.

Es ist auch vom Vorteil, dass das geschlitzte Mehrfach-Hohlprofilelement in einem Endabschnitt mehrere materialfreie Einschnitte aufweist. Die mehreren materialfreien Einschnitte sind vorzugsweise nicht miteinander verbunden. Damit kann gezielt und feinstufig eine gewünschte Verformung im Belastungsfall der Hohlprofilelemente vorgegeben werden.

Besonders bevorzugt weisen bei einer erfindungsgemäßen Vorrichtung mit genau zwei Vertikalstützen beide Vertikalstützen im jeweils oberen Endabschnitt, vorzugsweise innerhalb eines Viertels oder eines Drittels der Gesamtlänge der Vertikalstütze, mehrere in Längsrichtung der Vertikalstütze voneinander beabstandete bzw. voneinander getrennte Materialausnehmungen bzw. Schlitze auf. Vorzugsweise sind beide Vertikalstützen identisch mit Materialaussparungen versehen. Vorzugsweise sind in einer Vertikalstütze drei bis 8, bzw. genau 5, genau 6 oder genau 7 Materialaussparungen bzw. Schlitze ausgebildet. Die Schlitze spannen jeweils parallele voneinander beabstandete Ebenen auf, welche winklig zur Längsachse der Vertikalstütze vorzugsweise rechtwinklig zur Längsachse verlaufen.

Aufgrund der Materialausnehmungen bzw. der Schlitzung im einfach- oder Mehrfach-Hohlprofil kann eine Person, welche mit dem an der Vorrichtung vorhandenen Personenrückhaltesystems gesichert ist, in einem Belastungsfall auf die Vorrichtung wie einem Aufprallunfall des Verkehrsmittels vor unerwünschten Verletzungen geschützt werden, indem die Grundhaltefunktion der Vorrichtung sicher erhalten bleibt bzw. die Vorrichtung nicht bricht oder ggf. sogar aus dem Bodenbereich des Verkehrsmittels herausgerissen wird. Denn mit den materialfreien Bereichen bzw. Schlitzen kann auf einfache Weise und systematisch beziehungsweise vorgebbar eine einzelne oder mehrere Soll-Verformungsstelle im Einfach- oder Mehrfach-Hohlprofilelement ausgebildet werden. Damit wird im Belastungsfall zwangsweise eine tolerierbare Verformung der Hohlprofile erzwungen, so dass dabei Energie umgewandelt wird und somit keine Energiespitze auftritt, die zum plötzlichen Versagen bzw. Brechen der Vorrichtung führt bzw. es ausgeschlossen ist, dass die Vorrichtung aus dem Bodenbereich des Fahrzeugs herausgerissen wird. Denn an den materialfreien Bereichen bzw. Schlitzen kommt es zu einer plastischen Verformung im geschlitzten Bereich des Einfach- oder Mehrfach-Hohlprofilelements, womit ausgeschlossen ist, dass der betreffende Bauteilabschnitt bricht. Damit findet eine Energieumwandlung in einem Belastungsfall wie einem Aufprallunfall des Verkehrsmittels in kontrollierter Weise statt, wobei die Verformung in einem vorgebbaren bzw. tolerierbaren Maß gehalten wird. Die Vorgabe ist abhängig von der Art bzw. Anzahl der materialfreien Bereiche bzw. Schlitze.

Die Schlitzrichtung liegt vorzugsweise entlang einer Ebene quer oder schräg zur Längsrichtung des Einfach- oder Mehrfach-Hohlprofilelements. Vorzugsweise wird die Schlitzung im Zustand der beiden miteinander längsseitig verbundenen Hohlkörper nachträglich spanabhebend im Einfach- oder Mehrfach-Hohlprofilelement eingebracht, beispielsweise durch Fräsen oder Sägen.

Eine alternative bevorzugte Ausbildung der Erfindung zeichnet sich dadurch aus, dass ein Abstand zwischen zwei durch jeweils einen Schlitz im Mehrfach-Hohlprofilelement gebildeten materialfreien Bereichs vorgebbar abgestimmt auf ein Verformungsverhalten des Mehrfach-Hohlprofilelementes bei einer mechanischen Belastung. Ein Abstand zwischen zwei Schlitzen liegt vorzugsweise zwischen 10 und 60 Millimeter.

Schließlich ist es vorteilhaft, dass eine Auslegerstütze vorhanden ist, welche mit der Vertikalstütze und/oder der Querstrebe verbunden ist und ein Fußabschnitt der Auslegerstütze im Bodenbereich des Verkehrsmittels abstützbar ist, wobei die Auslegerstütze ein Einfach-Hohlprofil umfasst oder ein Mehrfach-Hohlprofilelement umfasst, welches zwei längsseitig verbundene Hohlkörper umfasst, vorzugsweise gemäß dem Mehrfach-Hohlprofilelement der Vertikalstütze und/oder der Querstrebe ausgebildet ist.

Die Erfindung betrifft außerdem eine Personensitzanordnung für ein Verkehrsmittel mit einer Vorrichtung gemäß einer der oben beschriebenen Ausbildungsformen.

Des Weiteren erstreckt sich die Erfindung auf ein Verkehrsmittel mit einer Personensitzanordnung bzw. mit einer Vorrichtung in einer der oben diskutierten Ausgestaltungen.

### Figurenbeschreibung

Weitere Merkmale und Vorteile der Erfindung sind anhand schematisiert dargestellter Ausführungsbeispiele der Erfindung näher erläutert.

Im Einzelnen zeigt:
- Figur 1: eine perspektivische Ansicht schräg von oben einer erfindungsgemäßen Vorrichtung in einer ersten Ausführungsform,
- Figur 2: die Vorrichtung gemäß Figur 1 von vorne,
- Figur 3: eine perspektivische Ansicht schräg von vorne einer alternativen Ausführungsform einer erfindungsgemäßen Vorrichtung,
- Figur 4: die Vorrichtung gemäß Figur 3 von der Seite,
- Figur 5: einen Schnitt durch die Vorrichtung aus Figur 4 gemäß der Linie A-A in Figur 4 vergrößert dargestellt,
- Figur 6: einen Teil eines Ausschnitts aus Figur 5,
- Figur 7: einen Ausschnitt durch ein alternatives Mehrfach-Hohlprofilelement einer erfindungsgemäßen Vorrichtung,
- Figur 8: eine weitere Ausführungsform einer erfindungsgemäßen Vorrichtung von vorne,
- Figur 9: die Vorrichtung gemäß Figur 8 im Schnitt gemäß Linie B-B in Figur 8,
- Figur 10: einen Ausschnitt einer zur Vorrichtung gemäß der Figuren 8 und 9 leicht abgewandelten Ausführungsform einer erfindungsgemäßen Vorrichtung perspektivisch schräg von vorne,
- Figur 11: einen vergrößerten Ausschnitt der Vorrichtung gemäß Figur 10,
- Figur 12: einen Abschnitt einer Vertikalstütze einer erfindungsgemäßen Vorrichtung,
- Figur 13: eine weitere Ausführungsform einer
- und 14: erfindungsgemäßen Vorrichtung von der Seite und von vorne und
- Figur 15: einen Abschnitt einer alternativen Vertikalstütze einer erfindungsgemäßen Vorrichtung.

In den Figuren sind für sich entsprechende Teile unterschiedlicher Ausführungsformen teilweise die gleichen Bezugszeichen verwendet.

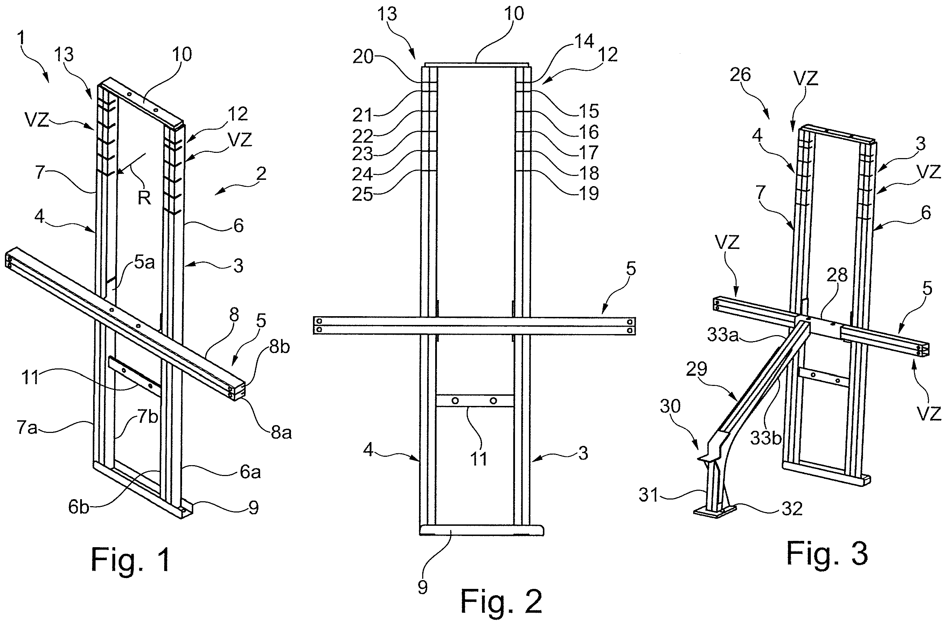

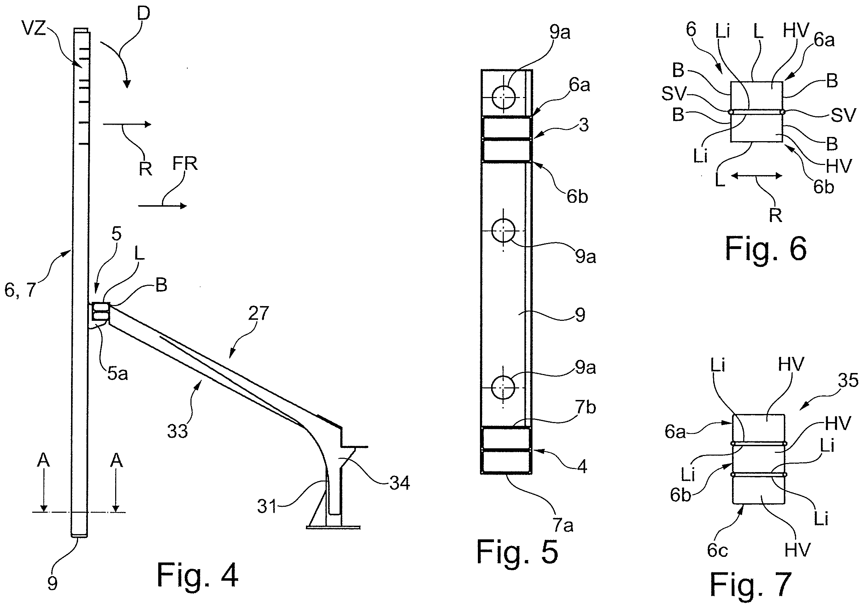

Figur 1 zeigt eine erfindungsgemäße Vorrichtung zur Anordnung eines Personenrückhaltesystems in einem Verkehrsmittel. Die Vorrichtung ist beispielhaft als Gestell für die Anbringung eines Personen-Sicherheitsgurtsystems bzw. als Gurtgestell 1 ausgebildet. Ein alternatives Gurtgestell 26 zeigen die Figuren 3 und 4. Am Gurtgestell 1, 26 lassen sich Komponenten eines Einfach- oder vorzugsweise Doppel-Fahrzeugsitzes befestigen, wie Rücken- und Armlehnen, Sitzpolster oder Sitz-Verstellmittel. Das Gurtgestellt 1, 26 ist geeignet, in einem Inneren des Verkehrsmittels wie einem Personenkraftfahrzeug zum Beispiel in einem Innenraum eines Kleinbusses oder eines Wohnmobils eingebaut zu werden, was vorzugsweise oberhalb bzw. an einem Bodenbereich im Verkehrsmittel erfolgt.

Das Gurtgestell 1, 26 ist bevorzugt in der Art einer Fachwerkstruktur ausgestaltet und umfasst eine Stützanordnung 2 mit einer Vertikalstütze oder hier beispielhaft zwei Vertikalstützen 3 und 4, die sich im Einbauzustand im Verkehrsmittel in senkrechter Ausrichtung befinden, sowie eine Querstrebe 5. Die Querstrebe 5 ist mit der Stützanordnung 2 verbunden, vorzugsweise in etwa einer halben vertikalen Höhe der Stützanordnung 2.

Die erste Vertikalstütze 3, die zweite Vertikalstütze 4 und die Querstrebe 5 sind erfindungsgemäß als Mehrfach-Hohlprofilelement 6, 7 und 8 aufgebaut, die im dargestellten Ausführungsbeispiel des Gurtgestells 1 jeweils gleichartig ausgebildet sind, hier vorzugsweise als Doppel- bzw. Zweifach- oder Zwillings-Hohlprofil.

Das Hohlprofilelement 6 umfasst rohrförmige Hohlkörper 6a, 6b, das Hohlprofilelement 7 umfasst die Hohlkörper 7a, 7b und das Hohlprofilelement 8 umfasst rohrförmige Hohlkörper 8a, 8b.

Die Ausbildung der Hohlprofilelemente 6 bis 8 ist anhand des Hohlprofilelements 6 nachfolgend konkret erläutert (siehe auch Figur 6) .

Die jeweiligen Hohlkörper 6a und 6b des Hohlprofilelements 6 sind untereinander vorzugsweise identisch, hier jeweils als Hohlprofilelement 6 mit rechteckigem Querschnitt gebildet, wobei ein über die Länge des jeweiligen Hohlkörpers 6a und 6b sich erstreckendes Innen- bzw. Hohlvolumen HV von den Außenwänden des jeweiligen Hohlkörpers 6a, 6b umschlossen ist.

Die entlang von Hohlkörper-Längskanten verbundenen Außenwände des jeweiligen Hohlkörpers 6a, 6b umfassen zwei zueinander parallele gegenüberliegende streifenförmige Längsseiten Li, L und dazu rechtwinklig ausgerichtet zwei zueinander parallele gegenüberliegende streifenförmige kürzere Breitseiten B. Der Hohlkörper 6a mit seiner Längsseite Li verbunden mit der Längsseite Li des Hohlkörpers 6b.

Die miteinander verbundenen flachen vorzugsweise ebenen Längsseiten Li der beiden Hohlkörper 6a, 6b sind im verbundenen Zustand in gegenseitiger flächiger Anlage oder geringfügig über einen Spalt mit geringer Spaltbreite von z. B. bis ca. einem Millimeter beabstandet voneinander. Die Verbindung der beiden Hohlkörper 6a, 6b bzw. deren einander zugewandten Längsseiten Li kann lösbar zum Beispiel durch eine Schraubverbindung oder nicht lösbar zum Beispiel durch Vernieten oder stoffschlüssig durch Verschweißen mit einer Schweißverbindung SV (s. Fig. 6), Verlöten oder Verkleben erfolgen.

Um ein Mehrfach-Hohlprofilelement zu bilden, kann das Hohlprofilelement 6 alternativ auch anders gebildet sein, zum Beispiel aus einem Materialstück hergestellt sein, wie z. B. einem ursprünglich ebenen Materialsteifen bzw. Blechstreifen, der mehrfach umgebogenen ist, so dass sich eine hohle Grundstruktur des Hohlprofilelements 6 mit z. B. zwei jeweils für sich umrandeten Hohlvolumina HV ergibt. Wesentlich für die erfindungsgemäße Vorrichtung ist dabei, dass mindestens zwei im Inneren des Hohlprofilelements 6 vorhandene nebeneinander liegende Längsseiten Li ausgebildet sind, vorzugsweise paarweise miteinander verbunden. Die wenigstens zwei inneren Längsseiten Li sind vorzugsweise zumindest über die wesentliche Länge des Hohlprofilelements 6 ausgestaltet.

Wenn ein alternatives erfindungsgemäßes Mehrfach Hohlprofilelement 35 gemäß Figur 7 zum Beispiel ausgehend von dem Hohlprofilelement 6 gemäß Figur 6 anstatt aus zwei aus zum Beispiel drei gleichen Hohlkörpern 6a, 6b, 6c besteht, die jeweils mit Längsseiten Li verbunden sind, dann weist das alternative Mehrfach-Hohlprofilelement 35 vier innere Längsseiten Li auf, die zwei jeweils paarweise verbundene innere Längsseiten Li bilden. Im Inneren des alternativen Mehrfach-Hohlprofilelements 35 sind dann drei getrennte Hohlvolumina HV vorhanden.

Die inneren Längsseiten Lᵢ zusammen mit den äußeren Längsseiten L stellen bei einer Belastung auf das Gurtgestell 1 bzw. 26 in den Belastungsrichtungen R, die quer auf das Gurtgestell 1 und damit die Vertikalstützen 3 und 4 wirken, eine vergleichsweise hohe mechanische Stabilität bzw. eine hohe Versteifungswirkung bereit. Eine Belastung in Belastungsrichtung R ist insbesondere durch ein Brems- oder Aufprallereignis gegeben, wenn eine Person in einem am Gurtgestell 1 angebrachten Fahrzeugsitz sitzt und mit einem am Gurtgestell1 befestigten Sicherheitsgurtsystem gesichert ist. Dabei werden Zug- und/oder Druckkräfte oder Momente am Gurtgestell wirksam, insbesondere in Belastungsrichtung R. Die entsprechenden Kräfte werden aufgrund der sich in Fahrtrichtung FR des Verkehrsmittels sich ruckartig bewegenden und abgebremsten Masse der gesicherten Person über das Sicherheitsgurtsystem in das Gurtgestell 1 eingeleitet.

Die Vertikalstützen 3, 4 mit den dem Mehrfach-Hohlprofilelement 6 oder eine Vertikalstütze mit dem Mehrfach-Hohlprofilelement 35 sind vorzugsweise so ausgerichtet, dass die von den Längsseiten L bzw. Lᵢ aufgespannte Ebenen quer zur Horizontalen und parallel zur Belastungsrichtung R ausgerichtet sind. Die Ebenen der Breitseiten B entsprechend quer zu den Ebenen der Längsseiten L.

Die Querstrebe 5 ist mit den Ebenen ihrer Längsseiten des Mehrfach-Hohlprofilelements 8 vorzugsweise parallel zur Horizontalen ausgerichtet.

Die beiden parallel in Längsrichtung senkrecht stehenden Vertikalstützen 3 und 4 stehen mit ihrem unteren Ende auf einem nach oben offenen U-förmigen Fußelement 9, welches unterseitig an einem Bodenbereich beispielsweise einem Fahrzeugboden aufliegend fixierbar ist. Die unteren Enden der beiden Vertikalstützen 3 und 4 sind beispielsweise an dem Fußelement 9 angeschraubt oder angeschweißt.

Zwischen den oberen Enden der Vertikalstützen 3 und 4 ist ein streifenförmiges flaches Verbindungsblech 10 vorgesehen, das jeweils endseitig an den Enden der Vertikalstützen 3 und 4 befestigt ist. Die Vertikalstützen 3, 4 mit dem Fußelement 9 und dem Verbindungsblech 10 bildet eine Rahmenstruktur mit einer Umrahmung, die eine zur Belastungsrichtung R senkrecht stehende materialfreie Rahmenebene geschlossen umrahmt. Im unteren Drittel der Höhe der Vertikalstützen 3 und 4 ist außerdem eine Strebe 11 innen zwischen gegenüberliegenden Längsseiten L der beiden Vertikalstützen 3 und 4 fest angebracht vorhanden.

Die Querstrebe 5 ist als Mehrfach-Hohlprofilelement 8 bzw. Doppel-Hohlprofil gestaltet und in ihrer Längserstreckung winklig bzw. senkrecht zur Längserstreckung der Vertikalstützen 3 und 4 horizontal ausgerichtet. Die beiden Hohlprofile 8a und 8b sind jeweils mit rechteckiger Grundform, vorzugsweise identisch mit den Hohlprofilen 6a, 6b bzw. 7a, 7b. Die Ebenen der Längsseiten L sind horizontal ausgerichtet.

Die Querstrebe 5 ist rückwärtig mit einem Befestigungsabschnitt 5a versehen zur Verbindung an den beiden Vertikalstützen 3 und 4.

Das Gurtgestell 1 bzw. 26 ist vorzugsweise aus einem hochfesten zum Beispiel metallischen Werkstoff beispielsweise aus einem Stahlmaterial gebildet.

Für eine gezielte Verformung unter Belastung in einem Belastungsfall insbesondere durch eine Zugbelastung in Belastungsrichtung R sind Sollbiegestellen bzw. Verformungszonen VZ am Gurtgestell 1, 26 vorzugsweise in den Vertikalstützen 3, 4 und der Querstrebe 5 vorgesehen. Die Verformungszonen sind beispielsweise durch Materialwandschwächungen und/oder durch materialfreie Aussparungen wie Löcher oder Schlitze in den Wandungen der Vertikalstützen 3, 4 und/oder der Querstrebe 5 ausbildbar. In den Figuren sind in den Verformungszonen VZ der Querstrebe 5 keine Materialeinschnitte oder dergleichen ausgeführt.

Bei den Gurtgestellen 1 und 26 ist beispielhaft im oberen Drittel der Länge der Vertikalstützen 3 und 4 jeweils eine Schlitzung 12 bzw. 13 mit einer Mehrzahl von Schlitzen vorgesehen. Die Schlitzungen 12 bzw. 13 sind gleichartig ausgebildet. Die Schlitzung 12 umfasst vom oberen Ende der Vertikalstütze 3 aus betrachtet zum Beispiel die Schlitze 14 bis 19. Jeder Schlitz 14 bis 19 bildet einen materialfreien Bereich bzw. Spalt in der Vertikalstütze 3. Die der Schlitzung 12 entsprechende Schlitzung 13 in der Vertikalstütze 4 umfasst beispielsweise die Schlitze 20 bis 25.

Die Schlitze 14 bis 25 können zueinander unterschiedlich gestaltet sein oder gleichartig bzw. identisch. Die am Gurtgestell 1 und 26 gezeigten Schlitze 14 bis 25 sind identisch was insbesondere eine Schlitzbreite, eine Schlitztiefe von der vorderen offenen Seite nach hinten und was die Längsposition entlang der Vertikalstützen 3 und 4 angeht.

Eine Spaltbreite der Schlitze 14 bis 25 liegt beispielsweise im Bereich von Millimetern zum Beispiel zwischen 1 und 2 mm. Die Schlitze 14 bis 25 erstrecken sich hier beispielhaft von einer Vorderseite der Vertikalstützen 3 und 4 senkrecht zur Längserstreckung der Vertikalstützen 3 und 4 nach hinten über beispielsweise etwa eine halbe Tiefe der Vertikalstützen 3 und 4.

Sämtliche Schlitze 14 bis 25 sind gerade Schlitze und senkrecht beziehungsweise quer zur Längsachse der Vertikalstützen 3 und 4 ausgebildet, wobei einzelne oder sämtliche Schlitze auch einen nicht geradlinigen bzw. gebogenen Verlauf aufweisen und/oder schräg zur Längsachse der Vertikalstützen 3 und 4 gerichtet sein können.

Wird bei einem Belastungsfall auf das Gurtgestell 1, 26 in Belastungsrichtung R eine Zugkraft an den Vertikalstützen 3, 4 wirksam, können die jeweiligen geschlitzten oberen Endabschnitte der Vertikalstützen 3, 4 definiert bzw. in einem vorbestimmbaren Maß sich verformen, vorzugsweise sich kontinuierlich verbiegen, und dabei Energie zur Verformung des Materials der Vertikalstützen 3, 4 abgeführt werden, was für eine gesicherte Person in einer dazugehörigen Fahrzeugsitz unkritisch ist, da die oberen Endabschnitte der Vertikalstützen 3, 4 in Richtung D nach vorne nur etwas verbogen werden (s. Fig. 4). Damit wird im Belastungsfall am Gurtgestell 1, 26 wirkende Energie abgeführt bzw. in Verformungs- und Reibungswärme umgewandelt, so dass sichergestellt wird, dass das Gurtgestell 1, 26 durch eine vorgebbare Deformation durch plastische Verformung nicht aus dem Bodenbereich des Fahrzeugs herausgerissen wird, was unerwünschte bzw. kritische Schadensfolgen für die gesicherte Person mit sich bringen würde. Ein Herausreißen des Gurtgestells könnte bei nicht geschlitztem Gurtgestell bzw. bei nicht geschlitzten Vertikalstützen 3, 4 mit höherer Wahrscheinlichkeit stattfinden bzw. würde bereits bei einer am Gurtgestell vergleichsweise geringeren wirkenden Energie stattfinden, bei welcher das erfindungsgemäße geschlitzte Gurtgestell 1, 26 sich lediglich kontrolliert verformen würde.

Zur kontrollierten vorgebbaren Verformung der Vertikalstützen 3, 4 und/oder der Querstrebe 5 bestehen diese aus einem geeigneten Material zum Beispiel aus einem plastisch vorteilhaft verformbaren Stahlmaterial.

Zur gezielten Vorgabe der Verformung des Gurtgestells 1, 26 im Belastungsfall kann unter anderem die Anzahl der Schlitze und/oder können die Abstände zwischen zwei benachbarten Schlitzen entsprechend gewählt werden.

Die Abstände zwischen den Schlitzen 14 bis 19 an der Vertikalstütze 3 und die Abstände zwischen den Schlitzen 20 bis 25 an der Vertikalstütze 4 ist identisch. Demgemäß ist von einem oberen Ende der Vertikalstütze 3 bzw. 4 der erste Schlitz 14 und der zweite Schlitz 15 mit einem geringeren Abstand in Längsrichtung der Vertikalstützen 3, 4 versehen, als die jeweiligen Abstände zwischen den anderen Schlitzen 15 bis 19 bzw. 21 bis 25.

Figur 3 zeigt eine alternative erfindungsgemäße Vorrichtung, welche als Gurtgestell 26 ausgebildet ist. Das Gurtgestell 26 ist gegenüber dem Gurtgestell 1 erweitert und umfasst eine zum Gurtgestell 1 identisch ausgebildete Struktur und zusätzlich eine weitere Struktur, die eine Auslegerstütze 27 umfasst, womit das Gurtgestell 26 gegenüber dem Gurtgestell 1 mechanisch noch stabiler ausgebildet und flexibler bzw. universeller einsetzbar ist.

Die mit der Querstrebe 5 verbindbare Auslegerstütze 27 weist an ihrem oberen Ende ein U-förmiges Verbindungsblech 28 auf, das im mittleren Bereich der Querstrebe 5 diese vorne, oben und unten umgreift, um die Auslegerstütze 27 mit der Querstrebe 5 zu verbinden. Vom Verbindungsblech 28 erstreckt sich ein räumlich schräg ausgerichteter erster Abschnitt 29 bis zu einem Winkelbereich 30, an den sich ein vertikaler Fußabschnitt 31 mit einer endseitigen Fußplatte 32 anschließt, der mit dem Bodenbereich eines Fahrzeuges verbindbar ist.

Die Auslegerstütze 27 umfasst eine Grundstruktur, die wahlweise bzw. vorzugsweise aus einem Mehrfach-Hohlprofilelement 33 gebildet ist, welches vorzugsweise zwei Hohlkörper 33a und 33b umfasst. Die Hohlkörper 33a und 33b sind vorzugsweise identisch zum Beispiel entsprechend der im Querschnitt rechteckigen Hohlkörpern 6a, 6b aufgebaut, allerdings mit einem abgewinkelten Verlauf mit dem oberen längeren geraden Abschnitt 29 und dem kürzeren geraden Fußabschnitt 31.

Außerdem ist im Winkelbereich 30 außen an der Auslegerstütze 27 ein Verstärkungselement 34 vorgesehen.

Das Fußelement 9 ist über Öffnungen 9a an einem Fahrzeugboden fixierbar.

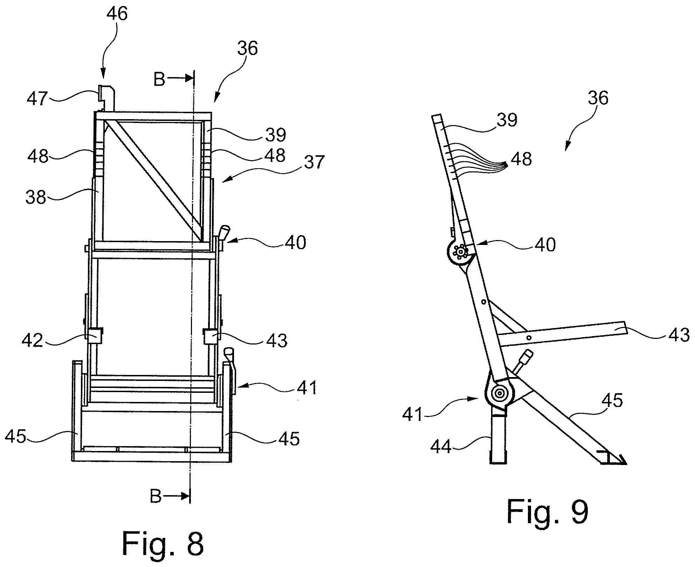

Die Figuren 8 und 9 zeigen eine weitere erfindungsgemäße Vorrichtung, die als Gurtgestell 36 mit einer Stützanordnung 37 ausgebildet ist.

Die Stützanordnung 37 umfasst zwei aufrecht stehende, parallel ausgerichtete hohle Vertikalstützen 38, 39 aus einem Stahl-Hohl-Vierkantprofil.

Zum platzsparenden Zusammenklappen des Gurtgestells 36 sind eine obere Gelenkanordnung 40 und eine untere Gelenkanordnung 41 mit jeweils im Nutzzustand horizontalen Gelenkachsen vorhanden. In vertikaler Richtung zwischen den beiden Gelenkanordnungen 40 und 41 ist an der Stützanordnung 37 beidseitig jeweils ein L-förmiges Auflageprofil 42 bzw. 43 zur Anordnung einer Sitzflächenstruktur des mit dem Gurtgestell 36 bildbaren Personensitzes vorhanden. Unterhalb der unteren Gelenkanordnung 41 sind weitere Elemente der Stützanordnung 37 mit jeweils seitlichen Stützstreben 44 und 45 vorgesehen, die unterseitig an einem Fahrzeugboden fixierbar sind.

Zur Anbringung eines Gurtumlenkers eines Personenrückhaltesystems (nicht dargestellt) mit einer Sicherheitsgurtanordnung ist am oberen Endabschnitt der Vertikalstütze 38 eine Anbringanordnung 46 in Form eines umgebogenen Blechabschnitts mit einer Schrauböffnung 47 ausgebildet. Die Anbringanordnung 46 ist an der Vertikalstütze 38 zum Beispiel angeschweißt.

In beiden Vertikalstützen 38, 39 sind hinsichtlich eines Belastungsfalls zum vorgegebenen plastischen Verformungsverhalten der Stützanordnung 37 bzw. der Vertikalstützen 38, 39 Materialausnehmungen vorhanden, welche jeweils sechs identische und horizontal beabstandete Schlitze 48 umfassen.

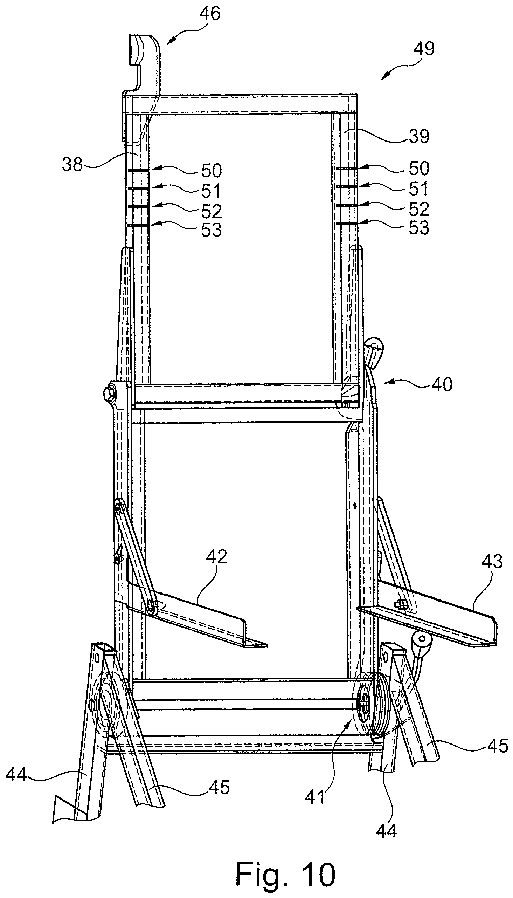

Figur 10 zeigt mit der Darstellung von verdeckten Kanten ein alternatives erfindungsgemäßes Gurtgestell 49 im Ausschnitt, das sich vom Gurtgestell 36 lediglich in der Anzahl und in der Ausbildung der Materialausnehmungen in den Vertikalstützen 38 und 39 unterscheidet. In beiden Vertikalstützen 38, 39 sind identische schlitzförmig Materialausnehmungen vorhanden, welche jeweils vier Schlitze 50, 51, 52 und 53 umfassen. Die Schlitze 50-53 durchgreifen die Wand der Vertikalstütze 38 komplett. Nachfolgend sind die Zusammenhänge für die Vertikalstütze 38 beschrieben, was auch auf die Vertikalstütze 39 übertragbar ist.

Die Schlitze 50-53 sind in einem oberen Abschnitt der Vertikalstütze 38 vorhanden und untereinander identisch und im Nutzzustand des Gurtgestells 49 bei senkrecht gestellten Vertikalstützen 38, 39 horizontal bzw. quer zur Längsachse der Vertikalstützen 38 und 39 ausgerichtet.

In der Regel werden die Schlitze 50-53 nachträglich in das ursprünglich umfänglich zur Längsachse geschlossene Hohl-Vierkantprofil der Vertikalstütze 38 durch einen Säge-Bearbeitungsvorgang oder dergleichen eingebracht.

Die Schlitze 50-53 bilden streifenförmige materialfreie Bereiche in einer Vorderwand 54 und in gegenüberliegenden Seitenwänden 55 und 56 der vierkantförmigen hohlen Vertikalstütze 38. Die Länge des jeweiligen Schlitzes 50-53 in den Seitenwänden 55, 56 erstreckt sich in den Seitenwänden 55, 56 jeweils bis etwas über die halbe Seitenwand-Breite, kann aber auch kürzer oder länger sein, abhängig davon, welches plastische Verformungsverhalten der Vertikalstützen 38, 39 gewünscht ist bzw. vorgegeben werden soll. Entsprechend kann eine Schlitzbreite SB der Schlitze 50-53 in Längsrichtung der Vertikalstütze 38 variabel vorgegeben sein. Die durchgehend einheitliche Schlitzbreite SB liegt in der dargestellten Ausführungsform zum Beispiel im Bereich der Wandstärke der Wände 54-57 der Vertikalstütze 38, 39 zum Beispiel zwischen ca. 1 und 5 Millimeter, vorzugsweise bei circa 3 Millimeter.

Eine Rückwand 57 der Vertikalstütze 38 ist von den Schlitzen 50-53 nicht betroffen und bleibt von zur Verformungsbeeinflussung bestimmten erfindungsgemäßen Materialausnehmungen frei.

Am Gurtgestell 36 können gegebenenfalls beispielsweise zur Anbringung von an dem Gurtgestell 36 befestigbaren Anbauelementen vorhandene Öffnungen in der Stützanordnung 37 bzw. in den Vertikalstützen 38, 39 haben nichts mit den erfindungsgemäßen Materialausnehmungen zu tun. Solche Öffnungen wie zum Beispiel Schrauböffnungen sind im Nutzzustand ohnehin in der Regel in ihrer Wirkung auf ein plastisches Verformen der Vertikalstützen irrelevant bzw. von dazugehörigen durchgreifenden Eingreifelementen wie z. B. Steckelementen oder Schrauben zumindest im Wesentlichen ausgefüllt und wirken sich damit nicht merklich auf das plastische Verformungsverhalten der Stützanordnung aus, auf welches die vorliegende Erfindung abzielt.

Jeder der U-förmigen Schlitze 50-53 ist mittig zur Vorderwand 54 von einem Materialsteg 58 unterbrochen, so dass der jeweilige Schlitz 50-53 aus zwei vom Materialsteg 58 getrennten Teilschlitzen bzw. zwei Teil-Materialausnehmungen gebildet ist. Die Materialstege 58 sind vorzugsweise ein verbleibender Teil der Vorderwand 54, können aber auch anderweitig z. B. durch einen nachträglich gesetzten Schweißpunkt bereitgestellt werden. Die grundlegend gewünschte Funktion bzw. Wirkung der Schlitze 50-53 im Hinblick auf das gewünschte vorgebbare plastische Verformungsverhalten der Vertikalstütze 38 bleibt für den betreffenden Belastungsfall aber trotz der Materialstege 58 erhalten.

Jeder der zum Beispiel ca. 1 bis 3 Millimeter breiten Materialstege 58 dient lediglich zur Stabilisierung der Vertikalstütze 38 bei geringen insbesondere länger andauernden Zug- oder Druckbelastungen auf die Vertikalstütze 38, damit diese sich nicht vergleichsweise gering plastisch verformt. Dies ist insbesondere ein praxisrelevantes Szenario wie einem Umkippen und eine folgende Kollision des Gurtgestells mit einem Hindernis oder Belastungen beim Transport bzw. ggf. bei der Montage des Gurtgestells 49. Mit den Materialstegen 58 wird ein Verbiegen der Vertikalstütze 38 bei geringeren Belastungen ausgeschlossen, die bezüglich der Belastungs-Stärke und Belastungs-Dynamik nicht mit den Belastungsfällen vergleichbar sind, auf welche die Erfindung abzielt.

Die Materialstege 58 wirken sich demgemäß nicht bzw. nicht nachteilig auf das mit den Schlitzen 50-53 bewusst gewollte plastische Verformungsverhalten bei einem insbesondere stoßartigen Belastungsfall wie einem Unfall des betreffenden Verkehrsmittels aus. In diesen Fällen werden die vergleichsweise schmalen Materialstege 58 selbst neben anderen Bereichen der Vertikalstütze 38 plastisch verformt bzw. verbogen.

Im praxisrelevanten kurzzeitig auftretenden Belastungsfall auf das Gurtgestell 49 bzw. auf eine damit gebildete PersonenSitzanordnung mit einem Personenrückhaltesystem mit gesicherter Person in einem Fahrzeug, zum Beispiel bei einem Auffahr-Aufprall des Fahrzeugs auf ein Hindernis, werden Momente bzw. Zugkräfte am Gurtgestell 49 in Belastungsrichtung R wirksam. Dabei werden die Vertikalstützen 38, 39 belastet und nach vorne in Richtung P1 bzw. in Fahrtrichtung FR des Fahrzeugs beansprucht und aufgrund der Schlitze 50-53 während der Belastungsdauer vorzugsweise kontinuierlich plastisch verformt bzw. verbogen. Die beiden Vertikalstützen 38 und 39 verformen sich dabei vorzugsweise gleichartig in einem für die gesicherte Person unkritischen Maß.

Der obere Teil des Gurtgestells 49 bzw. der Stützstruktur 37 mit den Vertikalstützen 38, 39 wird unter der Wirkung der beschleunigten bzw. abgebremsten Masse der gesicherten Person über Gurtabschnitte des Personenrückhaltesystem plastisch verbogen. Die betreffende Energie führt zum Verbiegen und zu Verformungsarbeit im plastisch verformbaren Stahlmaterial der Vertikalstützen 38, 39 im Nahbereich der Schlitze 50-53.

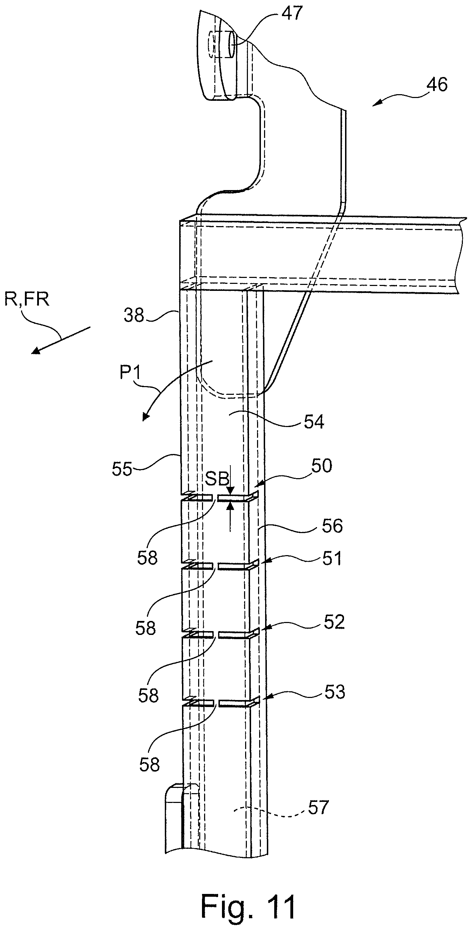

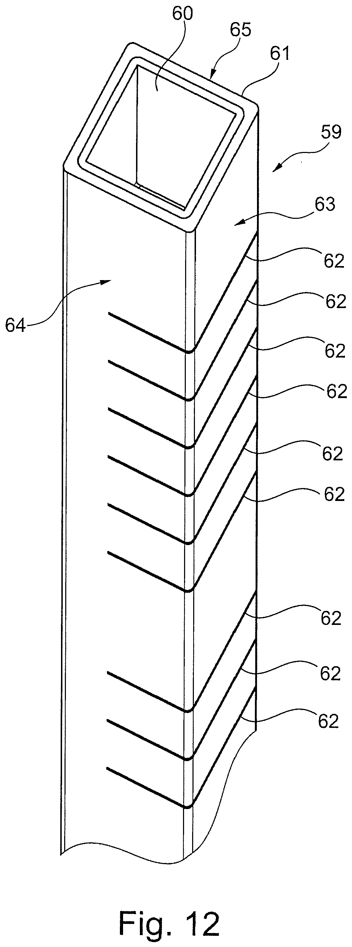

Figur 12 zeigt einen Ausschnitt eines oberen End-Abschnitts einer Vertikalstütze 59 eines alternativen erfindungsgemäßen Gurtgestells, wobei gegebenenfalls weitere Elemente des Gurtgestells an der Vertikalstütze 59 weggelassen sind. Die allseitig doppelwandige Vertikalstütze 59 ist durch zwei passend gestaltete und insbesondere ohne merkliches Spiel ineinandergesteckte und fest verbundene Vierkant-Hohlprofile 60 und 61 gebildet, welche quer zur Längsrichtung der Vertikalstütze 59 mehrere Materialausnehmungen bzw. U-förmige Schlitze 62 aufweist. Die zum Beispiel neun Schlitze 62 durchtrennen sowohl das innere Vierkant-Hohlprofil 60 als auch das äußere Vierkant-Hohlprofile 61. Jeder Schlitz 62 ist entsprechend der Schlitze 50-53 gemäß Figur 10 und 11 in einer Vorderwand 63 und in gegenüberliegenden Seitenwänden 64 und 65 der Vertikalstütze 59 ausgestaltet.

Die oberen sechs Schlitze 62 und die unteren drei Schlitze 62 sind jeweils zueinander mit gleichem Abstand in Längsrichtung der Vertikalstütze 59 vorhanden. Zwischen dem untersten der oberen sechs Schlitze 62 und dem obersten der unteren drei Schlitze 62 ist ein etwa dreifacher Abstand ausgebildet.

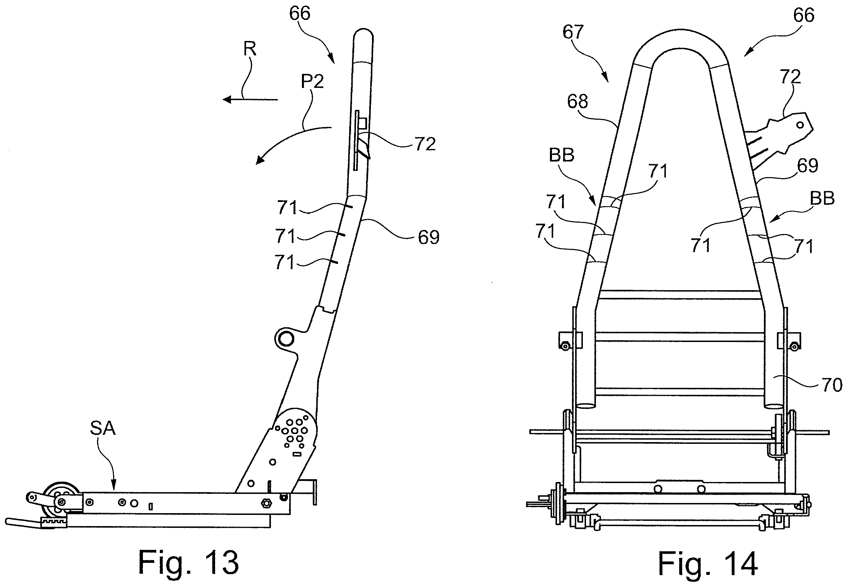

Des Weiteren zeigen die Figuren 13 und 14 eine weitere alternative erfindungsgemäße Vorrichtung, die als Gurtgestell 66 mit einer Stützanordnung 67 für einen damit herstellbaren gurtintegrierten Personensitz ausgebildet ist. Die Stützanordnung 67 umfasst zwei aufrecht stehende untereinander einstückig verbundene Vertikalstützen 68, 69, die durch Abschnitte eines bügelförmigen Einfach-Rohr-Hohlprofils 70 gebildet sind. Die nach unten gerichteten freien Enden des Einfach-Rohr-Hohlprofils 70 enden versetzt oberhalb zu einer Sitzflächenauflage SA des Gurtgestells 66. Das Gurtgestell 66 ist ausgebildet, mit der Unterseite der Sitzflächenauflage SA auf einem unten anschließenden Sitzkasten (nicht gezeigt) befestigt zu werden, der auf einem Fahrzeugboden fixierbar ist.

Auf gleicher Höhe der beiden Vertikalstützen 68 und 69 sind Materialausnehmungen in Form von jeweils drei identischen Schlitzen 71 vorhanden. Die Schlitze 71 sind in den Vertikalstützen 68, 69 vorderseitig und seitlich ausgebildet. Damit können sich bei einer Zugbelastung in Belastungsrichtung R die Vertikalstützen 68, 69 gemäß P2 nach vorne definiert aber unkritisch für eine gesicherte Person plastisch verformen bzw. verbiegen. Die beiden Vertikalstützen 68, 69 verbiegen sich nach vorne um einen durch die Schlitze 71 gezielt mechanisch geschwächten Soll-Biegebereich BB der jeweiligen Vertikalstütze 68 bzw. 69.

Die Schlitze 71 sind vorteilhaft in einem Abschnitt der Vertikalstützen 68, 69 unterhalb einer Anbringanordnung 72 für die Anbringung einer Gurtumlenkung des Personenrückhaltesystems ausgebildet.

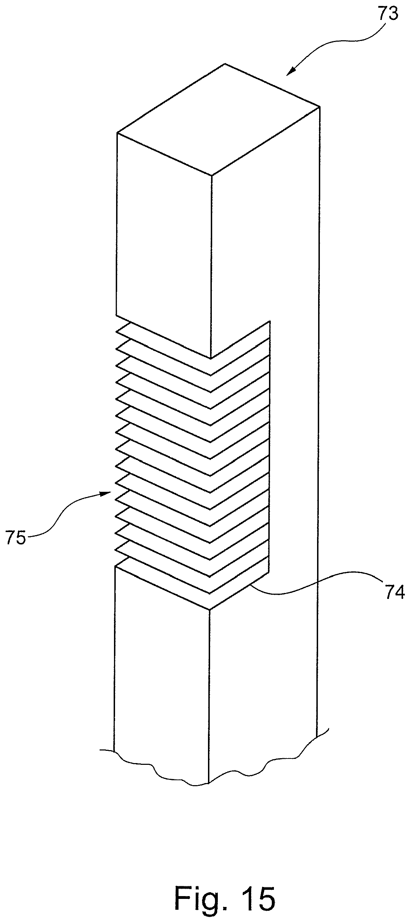

Figur 15 zeigt eine alternative hohle Vierkant-Vertikalstütze 73 mit einer fensterartigen Materialausnehmung 74 und einem darin eingesetzten Einsetzteil 75, aus z. B. einem Spritzgussteil, das als sich verformendes Verformungselement im Belastungsfall der Vertikalstütze 73 dient. Das Einsetzteil 75 ist lamellenartig bzw. ziehharmonikaartig aufgebaut.

**Bezugszeichenliste:**

| | | | |
|---|---|---|---|
| 1 | Gurtgestell | 37 | Stützanordnung |
| 2 | Stützanordnung | 38 | Vertikalstütze |
| 3, 4 | Vertikalstütze | 39 | Vertikalstütze |
| 5 | Querstrebe | 40 | Gelenkanordnung |
| 5a | Befestigungsabschnitt | 41 | Gelenkanordnung |
| 6 | Mehrfach-Hohlprofilelement | 42 | Auflageprofil |
| 6a | Hohlkörper | 43 | Auflageprofil |
| 6b | Hohlkörper | 44 | Stützstrebe |
| 6c | Hohlkörper | 45 | Stützstrebe |
| 7 | Mehrfach-Hohlprofilelement | 46 | Anbringanordnung |
| 7a | Hohlkörper | 47 | Schrauböffnung |
| 7b | Hohlkörper | 48 | Schlitz |
| 8 | Mehrfach-Hohlprofilelement | 49 | Gurtgestell |
| 8a | Hohlkörper | 50 | Schlitz |
| 8b | Hohlkörper | 51 | Schlitz |
| 9 | Fußelement | 52 | Schlitz |
| 9a | Öffnung | 53 | Schlitz |
| 10 | Verbindungsblech | 54 | Vorderwand |
| 11 | Strebe | 55 | Seitenwand |
| 12 | Schlitzung | 56 | Seitenwand |
| 13 | Schlitzung | 57 | Rückwand |
| 14-19 | Schlitz | 58 | Materialsteg |
| 20-25 | Schlitz | 59 | Vertikalstütze |
| 26 | Gurtgestell | 60 | Vierkant-Hohlprofil |
| 27 | Auslegerstütze | 61 | Vierkant-Hohlprofil |
| 28 | Verbindungsblech | 62 | Schlitz |
| 29 | Abschnitt | 63 | Vorderwand |
| 30 | Winkelbereich | 64 | Seitenwand |
| 31 | Fußabschnitt | 65 | Seitenwand |
| 32 | Fußplatte | 66 | Gurtgestell |
| 33 | Mehrfach-Hohlprofilelement | 67 | Stützanordnung |
| 33a | Hohlkörper | 68 | Vertikalstütze |
| 33b | Hohlkörper | 69 | Vertikalstütze |
| 34 | Verstärkungselement | 70 | Einfach-Rohr-Hohlprofil |
| 35 | Mehrfach-Hohlprofilelement | 71 | Schlitz |
| 36 | Gurtgestell | 72 | Anbringanordnung |
| | | 73 | Vertikalstütze |
| | | 74 | Materialausnehmung |
| | | 75 | Einsetzteil |

## Patentansprüche

1. Vorrichtung (1, 26, 36, 49, 66) zur Anordnung eines Personenrückhaltesystems in einem Verkehrsmittel, um mit dem Personenrückhaltesystem eine in dem Verkehrsmittel sitzende Person zu sichern, wobei die Vorrichtung eine Stützanordnung (2, 37, 67) mit einer Vertikalstütze (3, 4; 38, 39; 59; 68, 69) umfasst, wobei die Vertikalstütze (3, 4; 38, 39; 59; 68, 69) als zur Längsachse der Vertikalstütze (3, 4; 38, 39; 59; 68, 69) umfänglich geschlossenes oder überwiegend geschlossenes Hohlprofil ausgebildet ist, **dadurch gekennzeichnet, dass** die Vertikalstütze (3, 4; 38, 39; 59; 68, 69) mit einer Materialausnehmung in einer Wand (54-56) der Vertikalstütze (3, 4; 38, 39; 59; 68, 69) versehen ist, wobei die Materialausnehmung in einer Wand (54-56) der Vertikalstütze (3, 4; 38, 39; 59; 68, 69) schlitzförmig ausgebildet ist, wobei sich die Materialausnehmung an der betreffenden Stelle der Vertikalstütze über eine Vorderseite der Vertikalstütze (3, 4; 38, 39; 59; 68, 69) und über zumindest einen an die Vorderseite anschließenden seitlichen Bereich der Vertikalstütze (3, 4; 38, 39; 59; 68, 69) erstreckt.

2. Vorrichtung nach Anspruch 1, **dadurch gekennzeichnet, dass** eine Abmessung eines in der Vertikalstütze (3, 4; 38, 39; 59; 68, 69) gebildeten materialfreien Bereichs abgestimmt ist auf ein Verformungsverhalten der Vertikalstütze (3, 4; 38, 39; 59; 68, 69) bei einer mechanischen Belastung.

3. Vorrichtung nach einem der vorhergehenden Ansprüche, **dadurch gekennzeichnet, dass** die Materialausnehmung in einer Wand (54-56) der Vertikalstütze (3, 4; 38, 39; 59; 68, 69) mehrere voneinander getrennte materialfreie Bereiche umfasst.

4. Vorrichtung nach einem der vorhergehenden Ansprüche, **dadurch gekennzeichnet, dass** die Materialausnehmung (74) fensterartig ausgebildet ist.

5. Vorrichtung nach einem der vorhergehenden Ansprüche, **dadurch gekennzeichnet, dass** eine schlitzförmige Materialausnehmung auf einer Vorderseite der Vertikalstütze (3, 4; 38, 39; 59; 68, 69) durch einen Materialbereich (58) unterbrochen ist.

6. Vorrichtung nach einem der vorhergehenden Ansprüche, **dadurch gekennzeichnet, dass** an der Vertikalstütze (3, 4; 38, 39; 59; 68, 69) ein Zusatzelement vorhanden ist, welches ausgebildet ist, dass ein Eingreifabschnitt des Zusatzelements passend in die Materialausnehmung in der Wand (54-56) der Vertikalstütze (3, 4; 38, 39; 59; 68, 69) eingreift.

7. Vorrichtung nach einem der vorhergehenden Ansprüche, **dadurch gekennzeichnet, dass** die Materialausnehmung in der Wand der Vertikalstütze (3, 4; 38, 39; 59; 68, 69) in einem Bereich der Vertikalstütze (3, 4; 38, 39; 59; 68, 69) vorhanden ist, welcher sich unterhalb eines an der Vertikalstütze (3, 4; 38, 39; 59; 68, 69) vorbereitet vorhandenen Anbringbereichs (46,72) für eine Umlenkung eines Gurtes des Personenrückhaltesystems befindet.

8. Vorrichtung nach einem der vorhergehenden Ansprüche, **dadurch gekennzeichnet, dass** die Vertikalstütze (3, 4; 38, 39; 59; 68, 69) in Längsrichtung betrachtet innerhalb eines Endabschnitts der Vertikalstütze (3, 4; 38, 39; 59; 68, 69) mit einer Materialausnehmung in einer Wand der Vertikalstütze (3, 4; 38, 39; 59; 68, 69) versehen ist.

9. Vorrichtung nach einem der vorhergehenden Ansprüche, **dadurch gekennzeichnet, dass** die Vertikalstütze (3, 4; 59) als Mehrfach-Hohlprofilelement aufgebaut ist, wobei das Mehrfach-Hohlprofilelement über seine zumindest wesentliche Erstreckung zwei miteinander längsseitig verbundene Hohlkörper (7a, 7b; 60, 61) umfasst.

10. Vorrichtung nach einem der vorhergehenden Ansprüche, **dadurch gekennzeichnet, dass** an der Vertikalstütze (3, 4; 38, 39; 59; 68, 69) eine längliche Querstrebe (5) aufgenommen ist, die winklig zur Vertikalstütze (3, 4; 38, 39; 59; 68, 69) ausgerichtet ist.

11. Personensitzanordnung für ein Verkehrsmittel mit einer Vorrichtung (1, 26, 36, 49, 66) nach einem der Ansprüche 1 bis 10.

12. Verkehrsmittel mit einer Personensitzanordnung nach Anspruch 11 oder mit einer Vorrichtung (1, 26, 36, 49, 66) nach einem der Ansprüche 1 bis 10.

## Claims

1. Device (1, 26, 36, 49, 66) for arranging a passenger restraint system in a means of transport, in order to secure a person sitting in the means of transport by means of the passenger restraint system, wherein the device comprises a support arrangement (2, 37, 67) with a vertical support (3, 4; 38, 39; 59; 68, 69), wherein the vertical support (3, 4; 38, 39; 59; 68, 69) is designed as a hollow profile which is closed or mostly closed peripherally to the longitudinal axis of the vertical support (3, 4; 38, 39; 59; 68, 69), **characterised in that** the vertical support (3, 4; 38, 39; 59; 68, 69) is provided with a material recess in a wall (54-56) of the vertical support (3, 4; 38, 39; 59; 68, 69), wherein the material recess is designed to be slit-like in a wall (54-56) of the vertical support (3, 4; 38, 39; 59; 68, 69), wherein the material recess extends at the relevant point of the vertical support over a front side of the vertical support (3, 4; 38, 39; 59; 68, 69) and over a least one lateral area of the vertical support (3, 4; 38, 39; 59; 68, 69) adjoining the front side.

2. Device according to claim 1, **characterised in that** a dimension of a material-free area formed in the vertical support (3, 4; 38, 39; 59; 68, 69) is coordinated with a deformation behaviour of the vertical support (3, 4; 38, 39; 59; 68, 69) under mechanical load.

3. Device according to any of the preceding claims, **characterised in that** the material recess comprises a plurality of material-free areas separate from one another in a wall (54-56) of the vertical support (3, 4; 38, 39; 59; 68, 69).

4. Device according to any of the preceding claims, **characterised in that** the material recess (74) is designed to be window-like.

5. Device according to any of the preceding claims, **characterised in that** a slit-like material recess is interrupted on a front side of the vertical support (3, 4; 38, 39; 59; 68, 69) by a material portion (58).

6. Device according to any of the preceding claims, **characterised in that** on the vertical support (3, 4; 38, 39; 59; 68, 69) an additional element is provided which is designed so that an engagement portion of the additional element engages to fit into the material recess in the wall (54-56) of the vertical support (3, 4; 38, 39; 59; 68, 69).

7. Device according to any of the preceding claims, **characterised in that** the material recess is provided in the wall of the vertical support (3, 4; 38, 39; 59; 68, 69) in an area of the vertical support (3, 4; 38, 39; 59; 68, 69) which is located below an attachment area (46, 72) provided in preparation on the vertical support (3, 4; 38, 39; 59; 68, 69) for redirecting a belt of the passenger restraint system.

8. Device according to any of the preceding claims, **characterised in that**, as viewed in longitudinal direction, the vertical support (3, 4; 38, 39; 59; 68, 69) is provided inside an end portion of the vertical support (3, 4; 38, 39; 59; 68, 69) with a material recess in one wall of the vertical support (3, 4; 38, 39; 59; 68, 69).

9. Device according to any of the preceding claims, **characterised in that** the vertical support (3, 4; 59) is structured as a multiple hollow profile element, wherein the multiple hollow profile element comprises at least over its main extension two hollow bodies (7a, 7b; 60, 61) joined to one another along their longitudinal sides.

10. Device according to any of the preceding claims, **characterised in that** on the vertical support (3, 4; 38, 39; 59; 68, 69) an elongated cross member (5) is mounted which is aligned at an angle to the vertical support (3, 4; 38, 39; 59; 68, 69).

11. Passenger seat arrangement for a means of transport with a device (1, 26, 36, 49, 66) according to any of claims 1 to 10.

12. Means of transport with a passenger seat arrangement according to claim 11 or with a device (1, 26, 36, 49, 66) according to any of claims 1 to 10.

## Revendications

1. Dispositif (1, 26, 36, 49, 66) pour le montage d'un système de retenue de passagers dans un moyen de transport afin de sécuriser une personne assise dans le moyen de transport avec le système de retenue de passagers, le dispositif comprenant un dispositif support (2, 37, 67) avec un support vertical (3, 4 ; 38, 39 ; 59 ; 68, 69), lequel support vertical (3, 4 ; 38, 39 ; 59 ; 68, 69) est conçu sous la forme d'un profilé creux dont la circonférence par rapport à l'axe longitudinal du support vertical (3, 4 ; 38, 39 ; 59 ; 68, 69) est fermée ou en grande partie fermée, **caractérisé en ce que** le support vertical (3, 4 ; 38, 39 ; 59 ; 68, 69) est muni d'un évidement de matière dans une paroi (54-56) du support vertical (3, 4 ; 38, 39 ; 59 ; 68, 69), l'évidement de matière réalisé dans une paroi (54-46) du support vertical (3, 4 ; 38, 39 ; 59, 68, 69) étant conçu sous la forme d'une fente, l'évidement de matière, à l'emplacement considéré du support vertical, s'étendant sur une face avant du support vertical (3, 4 ; 38, 39 ; 59 ; 68, 69) et sur au moins une zone latérale du support vertical (3, 4 ; 38, 39 ; 59 ; 68, 69) adjacente à la face avant.

2. Dispositif selon la revendication 1, **caractérisé en ce qu'**une dimension d'une zone exempte de matière formée dans le support vertical (3, 4 ; 38, 39 ; 59 ; 68, 69) est adaptée à un comportement de déformation du support vertical (3, 4 ; 38, 39 ; 59 ; 68, 69) sous l'effet d'une sollicitation mécanique.

3. Dispositif selon l'une des revendications précédentes, **caractérisé en ce que** l'évidement de matière dans une paroi (54-56) du support vertical (3, 4 ; 38, 39 ; 59 ; 68, 69) comprend une pluralité de zones exemptes de matière qui sont séparées les unes des autres.

4. Dispositif selon l'une des revendications précédentes, **caractérisé en ce que** l'évidement de matière (74) est conçu sous la forme d'une fenêtre.

5. Dispositif selon l'une des revendications précédentes, **caractérisé en ce qu'**un évidement de matière en forme de fente sur une face avant du support vertical (3, 4 ; 38, 39 ; 59 ; 68, 69) est interrompu par une zone de matière (58).

6. Dispositif selon l'une des revendications précédentes, **caractérisé en ce qu'**un élément supplémentaire est présent sur le support vertical (3, 4 ; 38, 39 ; 59 ; 68, 69), lequel élément supplémentaire est conçu de telle sorte qu'une section d'engagement de l'élément supplémentaire s'engage de manière ajustée dans l'évidement de matière dans la paroi (54-56) du support vertical (3, 4 ; 38, 39 ; 59 ; 68, 69).

7. Dispositif selon l'une des revendications précédentes, **caractérisé en ce que** l'évidement de matière dans la paroi du support vertical (3, 4 ; 38, 39 ; 59 ; 68, 69) est présent dans une zone du support vertical (3, 4 ; 38, 39 ; 59 ; 68, 69) qui se trouve sous une zone de fixation (46, 72) présente de façon préparée sur le support vertical (3, 4 ; 38, 39 ; 59 ; 68, 69) pour un renvoi d'une ceinture du système de retenue de passagers.

8. Dispositif selon l'une des revendications précédentes, **caractérisé en ce que,** considéré dans le sens longitudinal, le support vertical (3, 4 ; 38, 39 ; 59 ; 68, 69) est muni d'un évidement de matière dans une paroi du support vertical (3, 4 ; 38, 39 ; 59 ; 68, 69) dans une partie d'extrémité du support vertical (3, 4 ; 38, 39 ; 59 ; 68, 69).

9. Dispositif selon l'une des revendications précédentes, **caractérisé en ce que** le support vertical (3, 4 ; 59) est construit comme un élément à profilés creux multiples, l'élément à profilés creux multiples comprenant sur au moins sensiblement son extension deux corps creux (7a, 7b ; 60, 61) reliés entre eux longitudinalement.

10. Dispositif selon l'une des revendications précédentes, **caractérisé en ce qu'**une entretoise allongée (5) est reçue sur le support vertical (3, 4 ; 38, 39 ; 59 ; 68, 69), en étant orientée en faisant un angle par rapport au support vertical (3, 4 ; 38, 39 ; 59 ; 68, 69).

11. Agencement de siège de passagers pour un moyen de transport avec un dispositif (1, 26, 36, 49, 66) selon l'une des revendications 1 à 10.

12. Moyens de transport avec un agencement de siège de passagers selon la revendication 11 ou avec un dispositif (1, 26, 36, 49, 66) selon l'une des revendications 1 à 10.
